# EUROPÄISCHE PATENTANMELDUNG

(11) **EP 3 915 907 A1**
(43) Veröffentlichungstag der Anmeldung: **01.12.2021**
(21) Anmeldenummer: 21176742.1
(22) Anmeldetag: 28.05.2021
(51) Int. Cl.: B65G 47/86

(54) **FÖRDERANLAGENVORRICHTUNG UND FÖRDERANLAGE ZU EINEM GEORDNETEN FÖRDERN VON LÄNGLICH ERSTRECKTEN OBJEKTEN WIE AMPULLEN, KARPULEN, SPRITZEN, PIPETTEN, VIALS ODER DERGLEICHEN**

(30) Priorität: 28.05.2020 DE 102020114391
(71) Anmelder: Wollmershäuser, Manfred, 74541 Vellberg-Talheim (DE)
(72) Erfinder: Wollmershäuser, Manfred, 74541 Vellberg-Talheim (DE)
(74) Vertreter: Daub, Thomas

(57) **Zusammenfassung**

Die Erfindung geht aus von einer Förderanlagenvorrichtung (82a-e) zu einem geordneten Fördern von länglich und/oder zylindrisch erstreckten Objekten (10a-e) wie Ampullen, Karpulen, Spritzen, Pipetten, Vials oder dergleichen, mit zumindest einer, entlang einer Bewegungsrichtung (12a-e) beweglich gelagerten und zu einer Stück-für-Stück-Aufnahme der einzelnen Objekte (10a-e) vorgesehenen Objektaufnahmeeinheit (14a-e), welche zumindest einen, zumindest eine Objekthaltekontaktfläche (16a-e) ausbildenden und zur Halterung eines einzelnen Objekts (10a-e) in einem Aufnahmebereich (18a-e) der Objektaufnahmeeinheit (14a-e) vorgesehenen, Objektgreifer (20a-e) mit zumindest einem ersten Greiferelement (22a-e) und mit zumindest einem zweiten Greiferelement (24a-e), umfasst.

Es wird vorgeschlagen, dass das erste Greiferelement (22a-e) eine Objektmitnahmekontaktfläche (26a-e) ausbildet, welche dazu vorgesehen ist, in zumindest einem Betriebszustand das zu fördernde Objekt (10a-e) zu kontaktieren und mit der Objektaufnahmeeinheit (14a-e) mitzuführen.

## Beschreibung

### Stand der Technik

Die Erfindung betrifft eine Förderanlagenvorrichtung nach dem Oberbegriff des Anspruchs 1, eine Förderanlage nach dem Anspruch 14 und ein Verfahren nach dem Anspruch 15.

Es sind bereits Förderanlagen zu einem Fördern von Ampullen aus dem Stand der Technik bekannt, welche jedoch entweder beiderseits einer Förderrichtung durch Förderschienen begrenzt sind und somit keinen direkten seitlichen Zugriff auf die Ampulle, bzw. keinen direkten seitlichen Einblick auf die Ampulle, zulassen oder relativ komplizierte mechanische Greifmechanismen aufweisen.

Die Aufgabe der Erfindung besteht insbesondere darin, eine gattungsgemäße Vorrichtung mit vorteilhaften Fördereigenschaften für länglich erstreckte Objekte wie Ampullen, Karpulen, Spritzen, Pipetten, Vials oder dergleichen bereitzustellen. Die Aufgabe wird erfindungsgemäß durch die Merkmale der Patentansprüche 1, 14 und 15 gelöst, während vorteilhafte Ausgestaltungen und Weiterbildungen der Erfindung den Unteransprüchen entnommen werden können.

### Vorteile der Erfindung

Die Erfindung geht aus von einer Förderanlagenvorrichtung zu einem geordneten Fördern von länglich und/oder zylindrisch erstreckten Objekten wie (Glas- und/oder Kunststoff-) Ampullen, Karpulen, Spritzen, Pipetten, Vials (Injektionsfläschchen) oder dergleichen, mit zumindest einer, entlang einer Bewegungsrichtung beweglich gelagerten und zu einer Stück-für-Stück-Aufnahme der einzelnen Objekte vorgesehenen Objektaufnahmeeinheit, welche zumindest einen, zumindest eine Objekthaltekontaktfläche ausbildenden und zur Halterung, insbesondere zur relativ zur Objektaufnahmeeinheit positionsfesten Fixierung, eines einzelnen Objekts in einem Aufnahmebereich der Objektaufnahmeeinheit vorgesehenen, Objektgreifer mit zumindest einem ersten Greiferelement und mit zumindest einem zweiten Greiferelement, umfasst.

Es wird vorgeschlagen, dass das erste Greiferelement eine Objektmitnahmekontaktfläche ausbildet, welche dazu vorgesehen ist, in zumindest einem Betriebszustand das zu fördernde Objekt zu kontaktieren und, vorzugsweise entlang der Bewegungsrichtung der Objektaufnahmeeinheit, mit der Objektaufnahmeeinheit mitzuführen. Dadurch können insbesondere vorteilhafte Fördereigenschaften erreicht werden. Insbesondere kann eine besonders vorteilhafte Übergabe des zu fördernden Objekts an einem Einlauf einer Förderanlage erreicht werden. Vorteilhaft kann das Objekt zunächst von weiteren Objekten vereinzelt und danach gegriffen, d.h. insbesondere in dem Objektgreifer fixiert, werden. Vorteilhaft kann dadurch eine besonders hohe Betriebssicherheit, d.h. insbesondere eine besonders ausfallsichere Förderung der Objekte (kein Verkanten, etc.), erreicht werden. Vorteilhaft kann zudem, insbesondere dadurch, dass keine zusätzlichen, eine Haltekraft erzeugenden Systeme wie eine Vakuumansaugung, eine äußere Führungsschiene oder eine mechanische Greifereinheit notwendig sind, eine besonders einfache und damit kostengünstige Förderanlage bereitgestellt werden. Außerdem kann vorteilhaft eine Förderung von Objekten ermöglicht werden, welche, insbesondere durch den Verzicht auf eine äußere Führungsschiene, einen direkten seitlichen Zugriff auf das zu fördernde Objekt und/oder einen direkten seitlichen Einblick auf das zu fördernde Objekt, beispielsweise für eine Kontrolle des zu fördernden Objekts oder dessen Inhalts oder für eine Etikettierung des zu fördernden Objekts, erlaubt. Vorteilhaft kann durch den Objektgreifer ein unerwünschtes Kippen oder Umfallen der Objekte innerhalb der Förderanlage verhindert werden. Vorteilhaft kann ein automatisiertes Greifen der Objekte ermöglicht werden, welches zudem vorteilhaft besonders hohe Fördergeschwindigkeiten (z.B. in einem Bereich von 400 Objekten pro Minute) ermöglicht.

Unter einer "Förderanlagenvorrichtung" soll insbesondere zumindest ein Teil, insbesondere eine Unterbaugruppe, einer Förderanlage verstanden werden, wobei insbesondere zusätzlich auch Zubehöreinheiten für die Förderanlage umfasst sein können. Insbesondere kann die Förderanlagenvorrichtung auch die gesamte Förderanlage umfassen. Unter einem "länglichen" Objekt soll insbesondere ein Objekt verstanden werden, welches eine Haupterstreckungsrichtung aufweist, wobei eine Erstreckung des Objekts entlang der Haupterstreckungsrichtung zumindest 20 % länger, vorzugsweise zumindest 50 % länger, bevorzugt doppelt so lang und besonders bevorzugt zumindest viermal so lang ist wie eine maximale Erstreckung des Objekts in eine beliebige senkrecht zu der Haupterstreckungsrichtung ausgerichtete Richtung. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Vorzugsweise ist das Objekt zumindest abschnittsweise zylindrisch erstreckt, wobei eine Zylinderachse vorzugsweise parallel zu der Haupterstreckungsrichtung des Objekts verläuft.

Die Objektaufnahmeeinheit ist insbesondere beweglich entlang eines bekannten Führungssystems, beispielsweise entlang eines Schienensystems, entlang eines Führungsseils, entlang eines Führungsbandes oder dergleichen, gelagert. Dabei ist denkbar, dass entweder die Objektaufnahmeeinheit selbst angetrieben ist oder, dass die Objektaufnahmeeinheit von einem extern angetriebenen System, beispielsweise einem Antriebsseil, -band oder -schlitten, mitgezogen wird. Insbesondere gibt das Führungssystem die Bewegungsrichtung, vorzugsweise eine Bewegungsbahn vor. Die Bewegungsbahn kann insbesondere gerade oder gebogen, beispielsweise stadionförmig, sein. Vorzugsweise bildet das Führungssystem einen geschlossenen Kreislauf aus, d.h. insbesondere, dass die Objektaufnahmeeinheiten immer wieder an dem Einlauf vorbeigeführt werden, ohne dabei je die Bewegungsrichtung wechseln zu müssen. Alternativ sind jedoch auch offene Führungssysteme denkbar, bei denen die Objektaufnahmeeinheiten hin- und herbewegt werden. Vorzugsweise sind eine oder mehrere Objektaufnahmeeinheiten als eine Art Shuttle oder Mover ausgebildet. Insbesondere ist denkbar, dass die Förderanlage mehrere Objektaufnahmeeinheiten aufweist, welche insbesondere entlang eines gemeinsamen Führungssystems bewegt sind. Dabei ist beispielsweise denkbar, dass nur ein Teil aller Objektaufnahmeeinheiten, beispielsweise jede dritte, jede fünfte oder jede zehnte Objektaufnahmeeinheit, (direkt oder indirekt) angetrieben sind und alle weiteren Objektaufnahmeeinheiten von den angetriebenen Objektaufnahmeeinheiten geschoben und/oder gezogen werden. Unter einer "Stück-für-Stück-Aufnahme" von Objekten soll insbesondere verstanden werden, dass Objekte immer nur einzeln aufgenommen werden, d.h. insbesondere nicht in Gruppen von mehreren Objekten, wie beispielsweise in Paaren oder Dreier-Paketen, etc. Zudem werden bei der "Stück-für-Stück-Aufnahme" die Objekte, insbesondere an jedem Einlauf der Förderanlage, vorzugsweise nacheinander, bevorzugt eins nach dem anderen, d.h. beispielsweise erst das erste Objekt, dann das zweite Objekt, dann das dritte Objekt, usw., von der Objektaufnahmeeinheit aufgenommen.

Die "Objekthaltekontaktfläche" ist insbesondere durch eine Fläche ausgebildet, welche dazu vorgesehen ist, das Objekt, beispielsweise an dessen Umfang, derart zu kontaktieren, dass dieses während einer Transportbewegung der Objektaufnahmeeinheit rutschfrei fixiert ist. Insbesondere ist zumindest ein Teil der Objekthaltekontaktfläche dazu vorgesehen, eine Haltekraft, d.h. eine Druckkraft, auf das Objekt auszuüben, welche das Objekt in dem Aufnahmebereich fixiert, beispielsweise indem die Haltekraft das Objekt gegen einen weiteren Teil der Objekthaltekontaktfläche drückt. Mehrere Teile der Objekthaltekontaktfläche können zumindest teilweise zueinander entgegenstehende Druckkräfte auf das Objekt ausüben. Vorzugsweise ist das Objekt in dem Aufnahmebereich zwischen Teilen der Objekthaltekontaktfläche eingeklemmt. Insbesondere ist der Objektgreifer frei von Aktoren, frei von Effektoren, frei von Spiralfedern, frei von mechanischen Gelenken, frei von Magneten und/oder frei von Vakuumansaugungen. Insbesondere ist zumindest ein Greiferelement relativ zu dem anderen Greiferelement elastisch auslenkbar. Vorzugsweise sind die Greiferelemente zueinander elastisch auslenkbar. Bevorzugt ist die Haltekraft, welche das Objekt in dem Aufnahmebereich fixiert, durch eine elastische Rückstellkraft zumindest eines der Greiferelemente oder beider Greiferelemente erzeugt. Insbesondere wird eines der Greiferelemente oder beide Greiferelemente bei einem Einbringen des Objekts in den Aufnahmebereich elastisch ausgelenkt, vorzugsweise elastisch von einem Zentrum des Aufnahmebereichs weggebogen. Insbesondere ist der Aufnahmebereich zumindest im Wesentlichen kreisförmig. Vorzugsweise bildet der Aufnahmebereich eine Form eines zu halternden Objekts nach. Insbesondere bildet die Objekthaltekontaktfläche zumindest einen Abschnitt einer Außenquerschnittsform des Objekts nach. Vorzugsweise ist der Aufnahmebereich leicht kleiner, insbesondere um zumindest 3 % kleiner, vorzugsweise um zumindest 5 % kleiner und bevorzugt um zumindest 10 % kleiner als ein von einem Querschnittsumfang des Objekts umgebener Bereich, insbesondere in einem Teilabschnitt des Objekts, in dem das Objekt von dem Objektgreifer gegriffen werden soll.

Vorzugsweise sind die Greiferelemente unterschiedlich ausgebildet. Bevorzugt weisen die Greiferelemente eine wesentlich voneinander verschiedene Außenform auf. Insbesondere ist ein erster Teil der Objekthaltekontaktfläche an dem ersten Greiferelement angeordnet. Insbesondere ist ein zweiter Teil der Objekthaltekontaktfläche an dem zweiten Greiferelement angeordnet. Vorzugsweise sind der erste Teil der Objekthaltekontaktfläche und der zweite Teil der Objekthaltekontaktfläche verschieden voneinander ausgebildet, insbesondere verschieden groß und/oder asymmetrisch. Insbesondere ist eine Gesamtoberfläche des zweiten Teils der Objekthaltekontaktfläche an dem zweiten Greiferelement kleiner, insbesondere um zumindest 2 % kleiner, vorzugsweise um zumindest 5 % kleiner, bevorzugt um zumindest 10 % kleiner als eine Gesamtoberfläche des ersten Teils der Objekthaltekontaktfläche an dem ersten Greiferelement. Insbesondere ist eine entlang eines Umfangs des Aufnahmebereichs gemessene Gesamtlänge des zweiten Teils der Objekthaltekontaktfläche an dem zweiten Greiferelement kleiner, insbesondere um zumindest 2 % kürzer, vorzugsweise um zumindest 5 % kürzer, bevorzugt um zumindest 10 % kürzer als eine entlang des Umfangs des Aufnahmebereichs gemessene Gesamtlänge des ersten Teils der Objekthaltekontaktfläche an dem ersten Greiferelement. Alternativ ist jedoch auch denkbar, dass die beiden Teile der Objekthaltekontaktfläche symmetrisch und/oder zumindest im Wesentlichen identisch zueinander ausgebildet sind. Die Objektmitnahmekontaktfläche ist insbesondere lediglich dazu vorgesehen, das Objekt in Richtung der Bewegungsrichtung zu schieben. Die Objektmitnahmekontaktfläche ist insbesondere nicht dazu vorgesehen, das Objekt zu greifen, eine Haltekraft auf das Objekt auszuüben und/oder das Objekt gegen eine weitere Fläche der Objektaufnahmeeinheit zu pressen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Außerdem wird vorgeschlagen, dass zumindest ein Großteil der Objektmitnahmekontaktfläche zumindest im Wesentlichen senkrecht zu der Bewegungsrichtung der Objektaufnahmeeinheit ausgerichtet ist. Dadurch kann eine vorteilhafte Mitnahme eines an dem Einlauf positionierten Objekts ermöglicht werden. Vorteilhaft kann eine gerichtete Mitnahme des Objekts ermöglicht werden. Vorteilhaft kann eine effektive Vereinzelung des Objekts, insbesondere noch vor dem Fixieren des Objekts in dem Aufnahmebereich des Objektgreifers ermöglicht werden. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist die Objektmitnahmekontaktfläche zumindest im Wesentlichen parallel zu einer Zuführrichtung, aus welcher die Objekte an dem Einlauf zu der Objektaufnahmeeinheit zugeführt werden, ausgerichtet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist die Objektmitnahmekontaktfläche von einer Objektgreiferbasis aus gesehen zumindest teilweise hinter dem Aufnahmebereich angeordnet. Insbesondere ist die Objektmitnahmekontaktfläche flach ausgebildet. Es ist jedoch auch denkbar, dass die Objektmitnahmekontaktfläche zumindest leicht geschwungen oder zumindest leicht schräg ausgebildet ist. Insbesondere ist das erste Greiferelement von der Objektgreiferbasis aus in Richtung des Aufnahmebereichs gesehen länger als das zweite Greiferelement. Insbesondere ist zumindest ein Teil der Objektmitnahmekontaktfläche weiter von der Objektgreiferbasis entfernt als ein am weitesten von der Objektgreiferbasis entfernter Teil des zweiten Greiferelements.

Ferner wird vorgeschlagen, dass die Objektmitnahmekontaktfläche zumindest abschnittsweise, vorzugsweise vollständig, verschieden und/oder getrennt von der Objekthaltekontaktfläche ausgebildet ist. Dadurch können besonders vorteilhafte Fördereigenschaften erreicht werden. Insbesondere kann eine vorteilhafte Trennung zwischen einem Vereinzelungsschritt und einem Fixierschritt vorgenommen werden. Dadurch kann einerseits eine besonders hohe Fördergeschwindigkeit erreicht werden und andererseits ein Verkantungsrisiko gesenkt werden. Unter "abschnittsweise" verschiedenen und/oder getrennt ausgebildeten Flächen sollen insbesondere Flächen verstanden werden, welche sich um maximal 50 %, vorzugsweise um maximal 33 %, bevorzugt um maximal 15 % und besonders bevorzugt um maximal 5 % einer Gesamtfläche der kleineren der beiden Flächen überlappen. Dabei ist insbesondere denkbar, dass der überlappende Abschnitt der beiden Flächen zugleich die Objekthaltekontaktfläche und die Objektmitnahmekontaktfläche ausbildet. Vorzugsweise sind die Objekthaltekontaktfläche und die Objektmitnahmekontaktfläche jedoch überlappungsfrei. Dabei können die Objekthaltekontaktfläche und die Objektmitnahmekontaktfläche ineinander übergehen und/oder direkt aneinander anliegen. Alternativ ist auch denkbar, dass die Objekthaltekontaktfläche und die Objektmitnahmekontaktfläche komplett voneinander getrennt sind, so dass eine weitere Fläche zwischen der Objekthaltekontaktfläche und der Objektmitnahmekontaktfläche liegt. Vorzugsweise weisen die Objektmitnahmekontaktfläche und die Objekthaltekontaktfläche wesentlich voneinander verschiedene Flächenformen und/oder Querschnittskonturen auf.

Des Weiteren wird vorgeschlagen, dass das zweite Greiferelement eine Objektführungskontaktfläche aufweist, welche zu einer Bewegungsführung einer zu dem ersten Greiferelement relativen Bewegung des Objekts von einer ersten Position, in der das Objekt überwiegend die Objektmitnahmekontaktfläche kontaktiert, zu einer zweiten Position, in der das Objekt überwiegend die Objekthaltekontaktfläche kontaktiert, vorgesehen ist. Dadurch können besonders vorteilhafte Fördereigenschaften erreicht werden. Vorteilhaft kann ein besonders gleitender und/oder sanfter Übergang von einer durch die Objektmitnahmekontaktfläche geführten zu der Objektaufnahmeeinheit relativen Position des Objekts zu einer in dem Aufnahmebereich fixierten Position des Objekts ermöglicht werden. Vorteilhaft kann ein Verkanten oder Umfallen des Objekts bei dem Übergang in die in dem Aufnahmebereich fixierte Position verhindert werden. Unter "überwiegend" soll in diesen Fall insbesondere zu mehr als 51 %, vorzugsweise zu mehr als 66 % und bevorzugt zu mehr als 80 % verstanden werden. Insbesondere liegt das Objekt in der ersten Position an der Objektmitnahmekontaktfläche an und wird durch die Objektmitnahmekontaktfläche in die Bewegungsrichtung geschoben. Insbesondere ist das Objekt in der zweiten Position in dem Aufnahmebereich des Objektgreifers fixiert. Insbesondere ist die Objektführungskontaktfläche zumindest abschnittsweise, vorzugsweise vollständig, verschieden und/oder getrennt von der Objekthaltekontaktfläche und/oder von der Objektmitnahmekontaktfläche ausgebildet ist. Vorzugsweise sind die Objekthaltekontaktfläche und die Objektführungskontaktfläche jedoch überlappungsfrei. Dabei können die Objekthaltekontaktfläche und die Objektführungskontaktfläche ineinander übergehen und/oder direkt aneinander anliegen. Alternativ ist auch denkbar, dass die Objekthaltekontaktfläche und die Objektführungskontaktfläche komplett voneinander getrennt sind, so dass eine weitere Fläche zwischen der Objekthaltekontaktfläche und der Objektmitnahmekontaktfläche liegt. Insbesondere sind die Objektführungskontaktfläche und die Objektmitnahmekontaktfläche immer vollständig voneinander getrennt. Vorzugsweise sind die Objektführungskontaktfläche und die Objektmitnahmekontaktfläche an verschiedenen Greiferelementen des Objektgreifers angeordnet. Vorzugsweise weist die Objektführungskontaktfläche eine Flächenform und/oder Querschnittskontur auf, die wesentlich verschieden von der Flächenform und/oder Querschnittskontur der Objektmitnahmekontaktfläche und/oder von der Flächenform und/oder Querschnittskontur der Objekthaltekontaktfläche ist.

Wenn die Objektführungskontaktfläche schräg zu der Objektmitnahmekontaktfläche und/oder schräg zu der Bewegungsrichtung der Objektaufnahmeeinheit, insbesondere am Ort eines Einlaufs der Förderanlagenvorrichtung, ausgerichtet ist, kann vorteilhaft ein besonders gleitender und/oder sanfter Übergang von einer durch die Objektmitnahmekontaktfläche geführten zu der Objektaufnahmeeinheit relativen Position des Objekts zu einer in dem Aufnahmebereich fixierten Position des Objekts ermöglicht werden. Darunter, dass die Objektführungskontaktfläche "schräg zu der Objektmitnahmekontaktfläche" ausgerichtet ist, soll insbesondere verstanden werden, dass eine Flächennormale der Objektführungskontaktfläche und eine Flächennormale der Objektmitnahmekontaktfläche einen Winkel zueinander einschließen, welcher insbesondere verschieden ist von 0° und verschieden ist von 90° ist. Vorzugsweise beträgt der Winkel der beiden Flächennormalen zwischen 30° und 75°, vorzugsweise zwischen 45° und 70° und bevorzugt etwa 60°. Insbesondere ist die Objektmitnahmekontaktfläche zumindest im Wesentlichen parallel zu einer Haupterstreckungsrichtung des ersten Greiferelements und/oder zu einer Haupterstreckungsrichtung des zweiten Greiferelements ausgerichtet. Insbesondere ist die Objektführungskontaktfläche in einem Winkel zwischen 30° und 75°, vorzugsweise zwischen 45° und 70° und bevorzugt etwa 60° zu der Haupterstreckungsrichtung des ersten Greiferelements und/oder zu einer Haupterstreckungsrichtung des zweiten Greiferelements ausgerichtet. Darunter, dass die Objektführungskontaktfläche "schräg zu der Bewegungsrichtung der Objektaufnahmeeinheit" ausgerichtet ist, soll insbesondere verstanden werden, dass eine Flächennormale der Objektführungskontaktfläche und die Bewegungsrichtung der Objektaufnahmeeinheit, insbesondere am Ort des Einlaufs der Förderanlage, einen Winkel zueinander einschließen, welcher insbesondere verschieden ist von 0° und verschieden ist von 90° ist. Vorzugsweise beträgt der Winkel zwischen der Flächennormalen der Objektführungskontaktfläche und der Bewegungsrichtung der Objektaufnahmeeinheit, insbesondere am Ort des Einlaufs der Förderanlage, zwischen 30° und 75°, vorzugsweise zwischen 45° und 70° und bevorzugt etwa 60°.

Wenn das erste Greiferelement und/oder das zweite Greiferelement elastisch rückfedernd ausgebildet ist, kann vorteilhaft eine besonders simple, kostengünstige und fehlerunanfällige Konstruktion der Förderanlagenvorrichtung erreicht werden. Vorteilhaft kann eine materialspezifische Elastizität zur Erzeugung der Haltekraft, insbesondere zur Fixierung des Objekts in dem Aufnahmebereich, verwendet werden. Insbesondere ist zumindest das erste Greiferelement und/oder das zweite Greiferelement, vorzugsweise der gesamte Objektgreifer, bevorzugt die gesamte Objektaufnahmeeinheit, zumindest zu einem Großteil, vorzugsweise vollständig. aus einem Kunststoff ausgebildet. Dadurch kann vorteilhaft eine kostengünstige Herstellung, insbesondere auch in Massenproduktion, ermöglicht werden. Beispielsweise kann das erste Greiferelement und/oder das zweite Greiferelement, vorzugsweise der gesamte Objektgreifer, bevorzugt die gesamte Objektaufnahmeeinheit, als ein Spritzgussteil und/oder als ein 3D-Druckteil ausgebildet sein. Insbesondere weist das Material, aus dem das Greiferelement und/oder das zweite Greiferelement, vorzugsweise der gesamte Objektgreifer, ausgebildet ist, ein Elastizitätsmodul zwischen 0,5 GPa und 5 GPa, vorzugsweise etwa 1,5 GPa, auf. Insbesondere ist denkbar, dass beide Greiferelemente unterschiedliche Elastizitäten aufweisen, vorzugsweise sind die Elastizitäten der beiden Greiferelemente zumindest im Wesentlichen identisch. Insbesondere weisen die beiden Greiferelemente eines Objektgreifers über einen Großteil ihrer Erstreckung in Richtung der Haupterstreckungsrichtung des Objektgreifers zumindest im Wesentlichen identische Querschnittsflächen und/oder Geometrien auf. Unter einem Großteil soll insbesondere zumindest 51 %, vorzugsweise zumindest 66 %, bevorzugt zumindest 75 % und besonders bevorzugt zumindest 90 % verstanden werden. Unter der Wendung "im Wesentlichen identisch" soll insbesondere mit einer Abweichung von weniger als 25 %, vorzugsweise von weniger als 15 %, bevorzugt von weniger als 5 % und besonders bevorzugt im Rahmen von Herstellungstoleranzen identisch verstanden werden. Insbesondere sind beide Greiferelemente dazu vorgesehen, bei einer Befestigung eines Objekts in dem Aufnahmebereich, insbesondere bei einem "einclipsen" eines Objekts in den Aufnahmebereich, zumindest im Wesentlichen identisch weit und/oder stark ausgelenkt zu werden. Insbesondere unterscheiden sich die Formen der beiden Greiferelemente nur an deren Objektgreiferbasis abgewandten Enden wesentlich voneinander. Alternativ wäre auch eine Ausbildung des Greiferelements und/oder des zweiten Greiferelements, vorzugsweise des gesamten Objektgreifers, aus einem Metall denkbar.

Zusätzlich wird vorgeschlagen, dass der Objektgreifer dazu vorgesehen ist, das Objekt durch einen von elastischen Spannungskräften der Greiferelemente hervorgerufenen Kraftschluss zu haltern. Dadurch kann vorteilhaft eine besonders simple, kostengünstige und fehlerunanfällige Konstruktion der Förderanlagenvorrichtung erreicht werden. Insbesondere übt zumindest ein Greiferelement, vorzugsweise üben beide Greiferelemente, eine Normalkraft auf ein in dem Aufnahmebereich angeordnetes Objekt aus, welches die Gewichtskraft des Objekts um ein Vielfaches übersteigt. Unter "elastischen Spannungskräften" sollen insbesondere durch eine Auslenkung der Greiferelemente aus deren Gleichgewichts- und/oder Ruhelage erzeugte Rückstellkräfte der Greiferelemente verstanden werden. Zusätzlich zu dem Kraftschluss ist auch ein (unterstützender) Formschluss zwischen den Greiferelementen und dem gehalterten Objekt denkbar.

Weiterhin wird vorgeschlagen, dass das erste Greiferelement des Objektgreifers und das zweite Greiferelement des Objektgreifers jeweils einstückig mit der Objektgreiferbasis ausgebildet sind. Dadurch kann vorteilhaft eine besonders simple, kostengünstige und fehlerunanfällige Konstruktion der Förderanlagenvorrichtung erreicht werden. Vorteilhaft kann eine Herstellung des Objektgreifers und/oder der Objektaufnahmeeinheit mittels 3D-Druck oder mittels eines einfachen Spritzgussverfahrens ermöglicht werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere liegt ein Ansatz der beiden Greiferelemente eines Objektgreifers an der Objektgreiferbasis auf etwa gleicher Länge entlang der Haupterstreckungsrichtungen des Objektgreifers.

Zudem wird vorgeschlagen, dass der Objektgreifer zumindest ein zu dem ersten Greiferelement zumindest im Wesentlichen identisches weiteres erstes Greiferelement aufweist und/oder dass der Objektgreifer zumindest ein zu dem zweiten Greiferelement zumindest im Wesentlichen identisches weiteres zweites Greiferelement aufweist. Dadurch kann vorteilhaft eine besonders stabile Halterung des Objekts erreicht werden. Vorteilhaft wird dadurch das Objekt durch insgesamt mindestens vier Greiferelemente gehaltert. Die weiteren Greiferelemente sind dazu vorgesehen, dasselbe Objekt zu haltern wie die Greiferelemente, lediglich die durch die weiteren Greiferelemente festgelegte Halteposition und die durch die Greiferelemente festgelegte Halteposition sind entlang der Haupterstreckungsrichtung des Objekts auf verschiedenen Ebenen angeordnet. Zusätzliche weitere Greiferelemente sind denkbar. Das erste weitere Greiferelement des Objektgreifers und das zweite weitere Greiferelement des Objektgreifers sind jeweils einstückig mit der Objektgreiferbasis ausgebildet.

Wenn die weiteren Greiferelemente des Objektgreifers jeweils mit den Greiferelementen des Objektgreifers zumindest zu einem Großteil, vorzugsweise zumindest im Wesentlichen vollständig, bevorzugt vollständig, überlappend angeordnet sind und/oder wenn die weiteren Greiferelemente des Objektgreifers in einer senkrecht zu dem Aufnahmebereich verlaufenden Richtung von den Greiferelementen des Objektgreifers beabstandet angeordnet sind, kann vorteilhaft eine besonders stabile Halterung des Objekts erreicht werden. Zudem kann vorteilhaft ein seitlicher Zugriff auf das zu fördernde Objekt, beispielsweise durch eine Fixiereinrichtung, und/oder ein seitlicher Einblick auf das zu fördernde Objekt ermöglicht werden. Zudem kann vorteilhaft eine besonders effiziente Konstruktion des Objektgreifers ermöglicht werden. Insbesondere überlappen sich die Greiferelemente und die weiteren Greiferelemente in einer Draufsicht auf den Objektgreifer, insbesondere entlang einer gedachten Zylinderachse eines gedachten in dem Aufnahmebereich fixierten länglichen und symmetrischzylindrischen Objekts. Unter der Wendung "beabstandet angeordnet" soll in diesem Zusammenhang verstanden werden, dass die Greiferelemente und die weiteren Greiferelemente einen Abstand entlang der Axialrichtung von zumindest 5 mm, vorzugsweise zumindest 10 mm, bevorzugt zumindest 20 mm und besonders bevorzugt zumindest 30 mm aufweisen. Bevorzugt beträgt der Abstand zwischen den Greiferelementen und den weiteren Greiferelementen in der Axialrichtung wenigstens einem Zweifachen, vorzugsweise wenigstens einem Dreifachen und bevorzugt wenigstens einem Vierfachen einer entlang der Axialrichtung gemessenen Dicke des Greiferelements und/oder des weiteren Greiferelements.

Vorteilhaft weist die Objektaufnahmeeinheit zumindest zwei, vorzugsweise zumindest drei, bevorzugt zumindest vier und besonders bevorzugt mehr als vier Objektgreifer auf. Dadurch können vorteilhafte Fördereigenschaften erreicht werden. Beispielsweise kann dadurch vorteilhaft eine besonders hohe Effizienz ermöglicht werden. Zudem kann vorteilhaft eine besonders enge Anordnung von Objektgreifern nebeneinander ermöglicht werden, wodurch insbesondere eine hohe Fördergeschwindigkeit erreicht werden kann. Außerdem kann vorteilhaft eine hohe Kosteneffizienz erreicht werden. Insbesondere weist die Objektaufnahmeeinheit zumindest den Objektgreifer und einen weiteren Objektgreifer auf. Alle weiteren Objektgreifer sind vorzugsweise ebenfalls wie der Objektgreifer jeweils einstückig mit der Objektgreiferbasis ausgebildet.

Wenn zudem die zumindest zwei Objektgreifer der Objektaufnahmeeinheit entlang einer geraden Linie in Reihe nebeneinander angeordnet sind, kann vorteilhaft eine Förderanlage mit zumindest einem geraden Streckenabschnitt ermöglicht werden. Vorteilhaft kann die Übergabe der Objekte, d.h. der Einlauf der Förderanlagenvorrichtung, in dem geraden Streckenabschnitt der Förderanlage positioniert werden. Insbesondere bildet die Objektaufnahmeeinheit in diesem Fall eine kammartige Anordnung von nebeneinanderliegenden Greiferelementen und/oder Objektgreifern aus. Insbesondere sind alle Objektgreifer einer Objektaufnahmeeinheit in einer gemeinsamen Ebene angeordnet. Insbesondere sind alle Greiferelemente einer Objektaufnahmeeinheit in einer gemeinsamen Ebene angeordnet. Insbesondere sind alle weiteren Greiferelemente einer Objektaufnahmeeinheit in einer weiteren gemeinsamen Ebene angeordnet, welche insbesondere parallel zu der gemeinsamen Ebene, in der die Greiferelemente angeordnet sind, ist und welche insbesondere von der gemeinsamen Ebene, in der die Greiferelemente angeordnet sind, verschieden und beabstandet ist.

Wenn alternativ oder zusätzlich die zumindest zwei Objektgreifer der Objektaufnahmeeinheit entlang einer eine gekrümmte Bahn, insbesondere eine Kreisbahn, ausbildenden Kurve nebeneinander angeordnet sind, kann vorteilhaft eine Förderanlage mit zumindest einem gekrümmten Streckenabschnitt, beispielsweise mit einem Kreisabschnitt, ermöglicht werden. Vorteilhaft kann die Übergabe der Objekte, d.h. der Einlauf der Förderanlagenvorrichtung, in dem gekrümmten Streckenabschnitt der Förderanlage positioniert werden. Vorteilhaft bildet die Objektaufnahmeeinheit einen Förderstern aus, welcher rund um seinen, insbesondere in einer Ebene verlaufenden, Außenumfang mit den Objektgreifern versehen ist.

Ferner wird vorgeschlagen, dass die Objektaufnahmeeinheit um eine zumindest im Wesentlichen senkrecht zu der Bewegungsrichtung der Objektaufnahmeeinheit und zumindest im Wesentlichen parallel zu einer Haupterstreckungsebene des Objektgreifers verlaufende Rotationsachse der Objektaufnahmeeinheit drehbar gelagert ist. Dadurch kann vorteilhaft eine Lage der durch die Objektaufnahmeeinheit gehalterten Objekte automatisiert verändert werden. Beispielsweise können die Objekte dadurch vorteilhaft auf den Kopf gestellt oder in eine waagerechte Position verbracht werden. Vorzugsweise ist die Objektaufnahmeeinheit um zumindest 180°, bevorzugt um zumindest 360° oder mehr drehbar um die Rotationsachse gelagert. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Insbesondere ist die Objektaufnahmeeinheit direkt angetrieben um die Rotationsachse drehbar gelagert. Alternativ kann die Objektaufnahmeeinheit aber auch derart gelagert sein, dass sie durch einen externen Einfluss, beispielsweise eine maschinelle oder manuelle Manipulation, drehbar ist. Insbesondere könnte die drehbare Lagerung um die Rotationsachse bestimmte durch Rastpositionen hervorgehobene Drehpositionen aufweisen, beispielsweise eine waagerechte Drehlage und eine vertikale Drehlage.

Des Weiteren wird vorgeschlagen, dass die Objekthaltekontaktfläche zumindest teilweise durch eine Mehrzahl, vorzugsweise durch zumindest drei, bevorzugt durch zumindest sechs, Wälzlager oder Rollen ausgebildet ist. Dadurch kann vorteilhaft eine Flexibilität erhöht werden. Vorteilhaft kann ein zusätzlicher Freiheitsgrad, insbesondere ein zusätzlicher Rotationsfreiheitsgrad, der durch den Objektgreifer gehalterten Objekte ermöglicht werden. Dadurch kann vorteilhaft ein Etikett, insbesondere ein rund um den Umfang des Objekts angeordnetes Etikett, auf dem Objekt angebracht werden, insbesondere während dieses von dem Objektgreifer gehalten ist. Insbesondere weist der Objektgreifer die Mehrzahl an Wälzlagern auf. Insbesondere sind die Wälzlager an den Greiferelementen angeordnet. Insbesondere sind die Wälzlager rund um den Aufnahmebereich angeordnet. Insbesondere stehen die Wälzlager in einer Ebene des Aufnahmebereichs leicht in den Aufnahmebereich über. Insbesondere ist denkbar, dass zumindest eines der Wälzlager maschinell angetrieben werden kann. Dadurch könnte eine Drehlage des Objekts vorteilhaft unabhängig eingestellt werden. Alternativ oder zusätzlich ist jedoch auch denkbar, dass die Drehung von einem zusätzlichen, getrennt von der Objektaufnahmeeinheit ausgebildeten Antrieb erzeugt werden kann, beispielsweise durch eine externe angetriebene Rolle, welche seitlich an eine Umfangsfläche des Objekts angedrückt wird.

Zusätzlich wird vorgeschlagen, dass die Förderanlagenvorrichtung eine Fixiereinrichtung aufweist, welche in einer durch die Bewegungsrichtung der Objektaufnahmeeinheit vorgegebenen Bewegungsbahn der durch die Objektmitnahmekontaktfläche geführten Objekte angeordnet ist, und welche dazu vorgesehen ist, die Objekte derart aus der durch die Objektaufnahmeeinheit vorgegebenen Bewegungsbahn abzulenken, dass die Objekte in den Aufnahmebereich der Objektaufnahmeeinheit verbracht werden. Dadurch können vorteilhafte Fördereigenschaften erreicht werden. Vorteilhaft kann dadurch ein einfacher, effektiver und/oder betriebssicherer Übergang des durch die Objektmitnahmekontaktfläche vereinzelten Objekts in die in dem Aufnahmebereich fixierte Position ermöglicht werden. Darunter, dass "die Fixiereinrichtung in der Bewegungsbahn angeordnet ist" soll insbesondere verstanden werden, dass die Fixiereinrichtung derart relativ zu der Objektaufnahmeeinheit angeordnet ist, dass ein durch die Objektmitnahmekontaktfläche geführtes Objekt mit der Fixiereinrichtung, insbesondere einer Rolle der Fixiereinrichtung, kollidiert. Zugleich überlappen dabei insbesondere die Fixiereinrichtung und der Aufnahmebereich nicht, d.h. wenn ein vollständig zylindrisches Objekt mit einem ungefähr dem Aufnahmebereich entsprechenden Durchmesser in dem Aufnahmebereich angeordnet wäre, würde dieses nicht mit der Fixiereinrichtung kollidieren. Insbesondere ist die Fixiereinrichtung relativ zu einer Bewegungsbahn, auf der sich die Objektaufnahmeeinheiten bewegen können, ortsfest positioniert, so dass die Fixiereinrichtung das Objekt insbesondere dadurch ablenkt, dass das Objekt auf die Fixiereinrichtung trifft und vorzugsweise daraufhin entlang der Objektführungskontaktfläche in Richtung des Aufnahmebereichs ausweicht. Insbesondere werden durch den von der Fixiereinrichtung erzeugten Druck die Greiferelemente auseinandergedrückt und der Aufnahmebereich aufgeweitet. Vorzugsweise sobald eine Öffnung zwischen der Objektführungskontaktfläche und der Objektmitnahmekontaktfläche einem (minimalen) Durchmesser des Objekts einspricht, rutscht das Objekt in den Aufnahmebereich. Insbesondere wenn das Objekt in dem Aufnahmebereich angeordnet ist, bildet die Fixiereinrichtung kein Hindernis mehr aus und das in dem Aufnahmebereich angeordnete Objekt kann die Fixiereinrichtung passieren. Das in dem Aufnahmebereich angeordnete Objekt ist in der Folge insbesondere durch die elastischen Rückstellkräfte der Greiferelemente in dem Aufnahmebereich eingeklemmt und darin sicher mittels der Objekthaltekontaktflächen gehaltert.

Wenn die Fixiereinrichtung zumindest eine Rolle aufweist, welche, insbesondere von einer Bewegungsebene der Objektaufnahmeeinheit aus gesehen, oberhalb der Greiferelemente, unterhalb der Greiferelemente und/oder zwischen den Greiferelementen und weiteren Greiferelementen des Objektgreifers angeordnet ist, kann vorteilhaft ein besonders sanfter Übergang in den Aufnahmebereich ermöglicht werden. Vorteilhaft kann ein Risiko eines Verkeilens des Objekts mit der Fixiereinrichtung gesenkt werden. Insbesondere überlappen sich aus einer Draufsicht gesehen und/oder aus einer senkrecht zu der Bewegungsebene stehenden Blickrichtung zumindest das erste Greiferelement und die Fixiereinrichtung bei einem Aneinander-vorbei-Bewegen von Objektgreifer und Fixiereinrichtung.

Ferner wird vorgeschlagen, dass die Förderanlagenvorrichtung zumindest eine Objektzuführeinheit aufweist, welche dazu vorgesehen ist, die Objekte entlang einer zumindest im Wesentlichen in einer Bewegungsebene der Objektaufnahmeeinheit verlaufenden und zumindest im Wesentlichen senkrecht oder schräg zu der Bewegungsrichtung der Objektaufnahmeeinheit stehenden Zuführrichtung der Objektaufnahmeeinheit zuzuführen. Dadurch können vorteilhafte Fördereigenschaften erreicht werden. Insbesondere kann dadurch eine vorteilhafte Übergabe der Objekte an die Objektaufnahmeeinheit realisiert werden. Insbesondere ist die Objektzuführeinheit dazu vorgesehen, einen, insbesondere in Richtung der Objektaufnahmeeinheit gestauten, Objektstau zu erzeugen. Insbesondere umfasst die Objektzuführeinheit ein oder mehrere Förderbänder oder Förderrollen, welche die Objekte in Richtung der Objektaufnahmeeinheit befördern. Vorzugsweise stehen die Objekte in der Objektzuführeinheit auf einem kontinuierlich bewegten Förderband. Alternativ ist auch denkbar, dass der Objektstau durch die Schwerkraft erzeugt wird, insbesondere indem die Objektzuführeinheit eine schiefe Ebene ausbildende Rampe aufweist. Insbesondere bildet die Objektzuführeinheit mittels einer zweiseitigen Begrenzung eine Art Schiene mit einer etwa einem Durchmesser des Objekts entsprechenden Breite aus, in welcher sich die Objekte hintereinander in einer einzigen Reihe aufreihen. Insbesondere sorgt die Objektzuführeinheit dafür, dass, nachdem ein Objekt von einem ersten Greiferelement eines Objektgreifers mittels der Objektmitnahmekontaktfläche aus der Reihe, d.h. insbesondere aus dem Objektstau, entfernt wird, sofort ein in dem Objektstau nachfolgendes Objekt den Platz des entfernten Objekts einnimmt. Insbesondere ist die Fixiereinrichtung an der Objektzuführeinheit montiert.

Weiterhin wird vorgeschlagen, dass die Förderanlagenvorrichtung eine Löseeinrichtung aufweist, welche in einer durch die Bewegungsrichtung der Objektaufnahmeeinheit vorgegebenen Bewegungsbahn der durch die Objektgreifer gehalterten Objekte angeordnet ist, und welche dazu vorgesehen ist, die Objekte derart aus der durch die Objektaufnahmeeinheit vorgegebenen Bewegungsbahn abzulenken, dass die Objekte aus dem Aufnahmebereich der Objektaufnahmeeinheit entfernt werden. Dadurch können vorteilhafte Fördereigenschaften erreicht werden. Insbesondere kann vorteilhaft ein hoher Grad an Automatisierung und/oder eine hohe Fördergeschwindigkeit erreicht werden. Darunter, dass "die Löseeinrichtung in der Bewegungsbahn angeordnet ist" soll insbesondere verstanden werden, dass die Löseeinrichtung derart relativ zu der Objektaufnahmeeinheit angeordnet ist, dass ein durch die Objektmitnahmekontaktfläche geführtes Objekt mit der Löseeinrichtung, insbesondere einer Rolle der Löseeinrichtung, kollidiert. Insbesondere ist die Löseeinrichtung derart in der Bewegungsbahn der Objektaufnahmeeinheit angeordnet, dass sich dabei die Löseeinrichtung und der Aufnahmebereich überlappen, d.h. wenn ein in dem Aufnahmebereich angeordnetes Objekt kollidiert mit der Löseeinrichtung. Insbesondere ist die Löseeinrichtung relativ zu einer Bewegungsbahn, auf der sich die Objektaufnahmeeinheiten bewegen können, ortsfest positioniert, so dass die Löseeinrichtung das Objekt insbesondere dadurch ablenkt und/oder aus dem Aufnahmebereich entfernt, dass das Objekt auf die Löseeinrichtung trifft und vorzugsweise daraufhin in Richtung der Öffnung zwischen der Objektführungskontaktfläche und der Objektmitnahmekontaktfläche des Aufnahmebereichs ausweicht. Insbesondere werden durch den von der Öffnung zwischen der Objektführungskontaktfläche und der Objektmitnahmekontaktfläche erzeugten Druck die Greiferelemente auseinandergedrückt und der Aufnahmebereich aufgeweitet. Vorzugsweise sobald eine Öffnung zwischen der Objektführungskontaktfläche und der Objektmitnahmekontaktfläche einem (minimalen) Durchmesser des Objekts entspricht, rutscht das Objekt aus dem Aufnahmebereich. Insbesondere wenn das Objekt aus dem Aufnahmebereich entfernt ist, bildet die Löseeinrichtung kein Hindernis mehr aus und die entleerte Objektaufnahmeeinheit kann die Löseeinrichtung passieren. Das aus dem Aufnahmebereich entfernte Objekt wird anschließend in eine Schiene eines Auslaufs der Förderanlagenvorrichtung eingefädelt und mittels einer Objektabführeinheit abtransportiert.

Wenn die Löseeinrichtung zumindest eine Rolle aufweist, welche, insbesondere von einer Bewegungsebene der Objektaufnahmeeinheit aus gesehen, oberhalb der Greiferelemente, unterhalb der Greiferelemente und/oder zwischen den Greiferelementen und weiteren Greiferelementen des Objektgreifers angeordnet ist, kann vorteilhaft eine besonders sanfte Entfernung aus dem Aufnahmebereich ermöglicht werden. Vorteilhaft kann ein Risiko eines Verkeilens des Objekts mit der Löseeinrichtung gesenkt werden. Insbesondere überlappen aus einer Draufsicht gesehen und/oder aus einer senkrecht zu der Bewegungsebene stehenden Blickrichtung das erste Greiferelement und das zweite Greiferelement mit der Löseeinrichtung bei einem Aneinander-vorbei-Bewegen von Objektgreifer und Löseeinrichtung.

Wenn zudem die Förderanlagenvorrichtung eine Objektabführeinheit aufweist, welche dazu vorgesehen ist, die durch die Löseeinrichtung aus den Objektgreifern entfernten Objekte geordnet abzuführen, kann vorteilhaft ein hoher Grad an Automatisierung und/oder eine hohe Fördergeschwindigkeit erreicht werden. Insbesondere umfasst die Objektabführeinheit ein oder mehrere Förderbänder oder Förderrollen, welche die Objekte von der Objektaufnahmeeinheit weg befördern. Vorzugsweise stehen die Objekte in der Objektabführeinheit auf einem kontinuierlich bewegten Förderband. Alternativ ist auch denkbar, dass die aus den Objektgreifern entfernten Objekte auf einer, eine schiefe Ebene ausbildenden Rampe abtransportiert werden. Insbesondere bildet die Objektabführeinheit mittels einer zweiseitigen Begrenzung eine Art Schiene mit einer, etwa einem Durchmesser des Objekts entsprechenden Breite aus, in welcher sich die Objekte hintereinander in einer einzigen Reihe aufreihen. Insbesondere sorgt die Objektabführeinheit dafür, dass, nachdem ein Objekt aus dem Objektgreifer entfernt wurde, dieses nicht mit nachfolgenden auf die Löseeinrichtung treffenden Objekten kollidiert. Insbesondere ist die Löseeinrichtung an der Objektabführeinheit montiert.

Außerdem wird vorgeschlagen, dass die Objektabführeinheit eine Vereinzelungseinheit, beispielsweise einen Zahnriemen, aufweist. Dadurch können vorteilhafte Fördereigenschaften erreicht werden. Vorteilhaft kann die einzelne Entnahme der Objekte aus der Objektaufnahmeeinheit dazu genutzt werden, eine Vereinzelung der Objekte aufrechtzuerhalten. Vorzugsweise entfernt der Zahnriemen ein entnommenes Objekt derart von einer Entnahmestelle, dass je ein Zahn des Zahnriemens zwei aufeinanderfolgende entnommene Objekte trennt.

Des Weiteren wird eine Förderanlage zu einem geordneten Fördern von länglich und/oder zylindrisch erstreckten Objekten wie Ampullen, Karpulen, Spritzen, Pipetten, Vials oder dergleichen, welche die Förderanlagenvorrichtung aufweist, vorgeschlagen. Dadurch können insbesondere vorteilhafte Fördereigenschaften erreicht werden. Vorteilhaft kann dadurch eine besonders hohe Betriebssicherheit, d.h. insbesondere eine besonders ausfallsichere Förderung der Objekte (kein Verkanten, etc.), erreicht werden. Vorteilhaft kann eine besonders einfache und damit kostengünstige Förderanlage bereitgestellt werden. Außerdem kann vorteilhaft eine Förderung von Objekten ermöglicht werden, welche einen direkten seitlichen Zugriff auf das zu fördernde Objekt und/oder einen direkten seitlichen Einblick auf das zu fördernde Objekt erlaubt. Vorteilhaft kann ein automatisiertes Greifen der Objekte ermöglicht werden, welches zudem vorteilhaft besonders hohe Fördergeschwindigkeiten ermöglicht. Insbesondere umfasst die Förderanlage die Objektzuführeinheit (Einlauf), die Objektabführeinheit (Auslauf), das Führungssystem zur Führung der Objektaufnahmeeinheit, den Antrieb zur Erzeugung der Bewegung der Objektaufnahmeeinheit und/oder eine Anpressrolle zu einer Rotation der in dem Aufnahmebereich von Wälzlagern gehaltenen Objekte.

Wenn die Förderanlage eine Mehrzahl von getrennt voneinander ausgebildeten, hintereinander aufgereihten und entlang einer, insbesondere zumindest teilweise linearen und zumindest teilweise gekrümmten, Förderschiene, insbesondere der Förderanlage und/oder der Förderanlagenvorrichtung, bewegbare Objektaufnahmeeinheiten aufweist, kann vorteilhaft eine effektive Förderung von Objekten über größere, teilweise lineare und teilweise gekrümmte, Förderstrecken erreicht werden. Insbesondere sind die hintereinander aufgereihten Objektaufnahmeeinheiten zumindest im Wesentlichen identisch zueinander ausgebildet, insbesondere abgesehen davon, dass einzelne Objektaufnahmeeinheiten angetrieben sind (d.h. einen eigenen Antrieb aufweisen oder mit einem gemeinsamen Antrieb der Förderanlage verbunden sind).

Alternativ wird vorgeschlagen, dass zumindest eine Objektaufnahmeeinheit als ein, insbesondere einstückiger, Förderstern ausgebildet ist. Dadurch können vorteilhafte Fördereigenschaften für ein Fördern von Objekten auf einer Kreisbahn erreicht werden.

Außerdem wird ein Verfahren zum Betrieb der Förderanlagenvorrichtung und/oder der Förderanlage vorgeschlagen.

Die erfindungsgemäße Förderanlagenvorrichtung, die erfindungsgemäße Förderanlage und das erfindungsgemäße Verfahren sollen hierbei nicht auf die oben beschriebene Anwendung und Ausführungsform beschränkt sein. Insbesondere kann die erfindungsgemäße Förderanlagenvorrichtung, die erfindungsgemäße Förderanlage und das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Draufsicht auf eine Förderanlage mit einer Förderanlagenvorrichtung,
- Fig. 2: eine schematische Detailansicht eines Objektgreifers einer Objektaufnahmeeinheit der Förderanlagenvorrichtung,
- Fig. 3: eine schematische perspektivische Ansicht eines Teils der Förderanlagenvorrichtung,
- Fig. 4: eine schematische Vorderansicht der Objektaufnahmeeinheit mit dem Objektgreifer,
- Fig. 5: eine schematische Detailansicht einer Objektabführeinheit der Förderanlagenvorrichtung,
- Fig. 6: ein schematisches Ablaufdiagramm eines Verfahrens zum Betrieb der Förderanlage,
- Fig. 7a: eine schematische Draufsicht auf den Teil der Förderanlagenvorrichtung mit einem Objekt in einer ersten Position,
- Fig. 7b: eine schematische Draufsicht auf den Teil der Förderanlagenvorrichtung mit dem Objekt in einer Zwischenposition,
- Fig. 7c: eine schematische Draufsicht auf den Teil der Förderanlagenvorrichtung mit dem Objekt in einer zweiten Position,
- Fig. 8a: eine alternative Förderanlagenvorrichtung mit einer alternativen Objektaufnahmeeinheit,
- Fig. 8b: eine alternative Förderanlagenvorrichtung mit einer weiteren alternativen Objektaufnahmeeinheit,
- Fig. 9: eine zweite alternative Förderanlagenvorrichtung mit einer zweiten alternativen Objektaufnahmeeinheit,
- Fig. 10: eine dritte alternative Förderanlagenvorrichtung mit einer dritten alternativen Objektaufnahmeeinheit und
- Fig. 11: eine vierte alternative Förderanlagenvorrichtung mit einer vierten alternativen Objektaufnahmeeinheit.

### Beschreibung der Ausführungsbeispiele

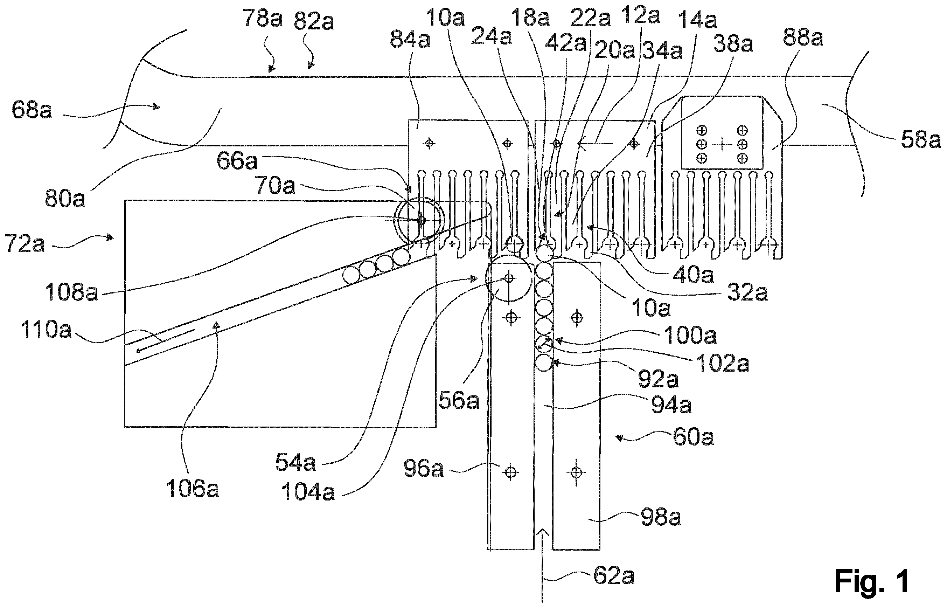

Die Fig. 1 zeigt eine schematische Draufsicht auf eine Förderanlage 78a. Die Förderanlage 78a ist zu einem geordneten Fördern von länglich und zylindrisch erstreckten Objekten 10a vorgesehen. Die in der Fig. 1 beispielhaft gezeigte Förderanlage 78a ist zu einem Fördern von Ampullen vorgesehen. Alternativ könnte die Förderanlage 78a auch zu einem Fördern von Karpulen, Spritzen, Pipetten, Vials oder dergleichen vorgesehen sein. Die Förderanlage 78a umfasst ein Führungssystem 58a mit zumindest einer Förderschiene 80a. Die Förderanlage 78a weist eine Förderanlagenvorrichtung 82a auf. Das Objekt 10a ist im Folgenden beispielhaft als eine Ampulle ausgebildet, könnte jedoch auch als eine Karpule, eine Spritze, eine Pipette, ein Vial oder dergleichen ausgebildet sein.

Die Förderanlagenvorrichtung 82a weist eine Objektaufnahmeeinheit 14a auf. Die in der Fig. 1 beispielhaft gezeigte Förderanlage 78a weist eine Mehrzahl von getrennt voneinander ausgebildeten, hintereinander aufgereihten und entlang der Förderschiene 80a bewegbaren Objektaufnahmeeinheiten 14a, 84a, 88a auf. Die Objektaufnahmeeinheiten 14a, 84a, 88a sind entlang einer gemeinsamen Bewegungsrichtung 12a beweglich gelagert. Die Förderschiene 80a gibt eine Bewegungsbahn 68a der Objektaufnahmeeinheiten 14a, 84a, 88a und damit auch von durch die Förderanlage 78a geförderten Objekten 10a vor. Eine der Objektaufnahmeeinheiten 88a der Mehrzahl an Objektaufnahmeeinheiten 14a, 84a, 88a ist beispielhaft als ein Shuttle ausgebildet, welches dazu vorgesehen ist, die anderen Objektaufnahmeeinheiten 14a, 84a der Mehrzahl von Objektaufnahmeeinheiten 14a, 84a, 88a vor sich her zu schieben. Die als Shuttle ausgebildete Objektaufnahmeeinheit 88a ist von einem Antrieb (nicht gezeigt) der Förderschiene 80a angetrieben. Die weiteren Objektaufnahmeeinheiten 14a, 84a sind entlang der Förderschiene 80a geführt. Abgesehen von der Verbindung mit der Förderschiene 80a sind die Objektaufnahmeeinheiten 14a, 84a, 88a zumindest im Wesentlichen identisch ausgebildet, so dass im Folgenden lediglich eine der Objektaufnahmeeinheiten 14a stellvertretend für alle Objektaufnahmeeinheiten 14a, 84a, 88a beschrieben ist.

Die Objektaufnahmeeinheit 14a ist zu einer Stück-für-Stück-Aufnahme der einzelnen Objekte 10a vorgesehen. Die Objektaufnahmeeinheit 14a umfasst einen Objektgreifer 20a. Der Objektgreifer 20a ist zu einer Halterung eines einzelnen Objekts 10a in einem Aufnahmebereich 18a der Objektaufnahmeeinheit 14a vorgesehen. Der Objektgreifer 20a weist ein erstes Greiferelement 22a auf. Der Objektgreifer 20a weist ein zweites Greiferelement 24a auf. Das erste Greiferelement 22a ist getrennt von dem zweiten Greiferelement 24a ausgebildet. Die Greiferelemente 22a, 24a bilden zusammen den Aufnahmebereich 18a aus. Das erste Greiferelement 22a ist elastisch rückfedernd ausgebildet. Das zweite Greiferelement 24a ist elastisch rückfedernd ausgebildet. Die Objektaufnahmeeinheit 14a umfasst eine Objektgreiferbasis 38a. Der Objektgreifer 20a ist einstückig mit der Objektgreiferbasis 38a ausgebildet. Das erste Greiferelement 22a des Objektgreifers 20a ist einstückig mit der Objektgreiferbasis 38a ausgebildet. Das zweite Greiferelement 24a des Objektgreifers 20a ist einstückig mit der Objektgreiferbasis 38a ausgebildet.

Die Objektaufnahmeeinheit 14a weist zumindest zwei Objektgreifer 20a, 40a auf. Die Objektaufnahmeeinheit 14a weist mehr als die zwei Objektgreifer 20a, 40a auf. Die Objektgreifer 20a, 40a der Objektaufnahmeeinheit 14a sind entlang einer geraden Linie in Reihe nebeneinander angeordnet.

Die Förderanlagenvorrichtung 82a weist eine Objektzuführeinheit 60a auf. Die Objektzuführeinheit 60a ist dazu vorgesehen, die Objekte 10a entlang einer in einer Bewegungsebene der Objektaufnahmeeinheit 14a Zuführrichtung 62a der Objektaufnahmeeinheit 14a zuzuführen. Die Zuführrichtung 62a steht in dem in Fig. 1 gezeigten Ausführungsbeispiel senkrecht zu einer Bewegungsrichtung 12a der Objektaufnahmeeinheit 14a. Die Objektzuführeinheit 60a umfasst ein Förderband 94a, auf welchem die Objekte 10a aufrecht aufgestellt sind. Die Objektzuführeinheit 60a umfasst Begrenzungen 96a, 98a, welche dazu vorgesehen sind, die Objekte 10a entlang einer einzelnen Reihe von Objekten 100a, welche parallel zu der durch das Förderband 94a erzeugten Zuführrichtung 62a ausgerichtet ist, auszurichten und zu führen.

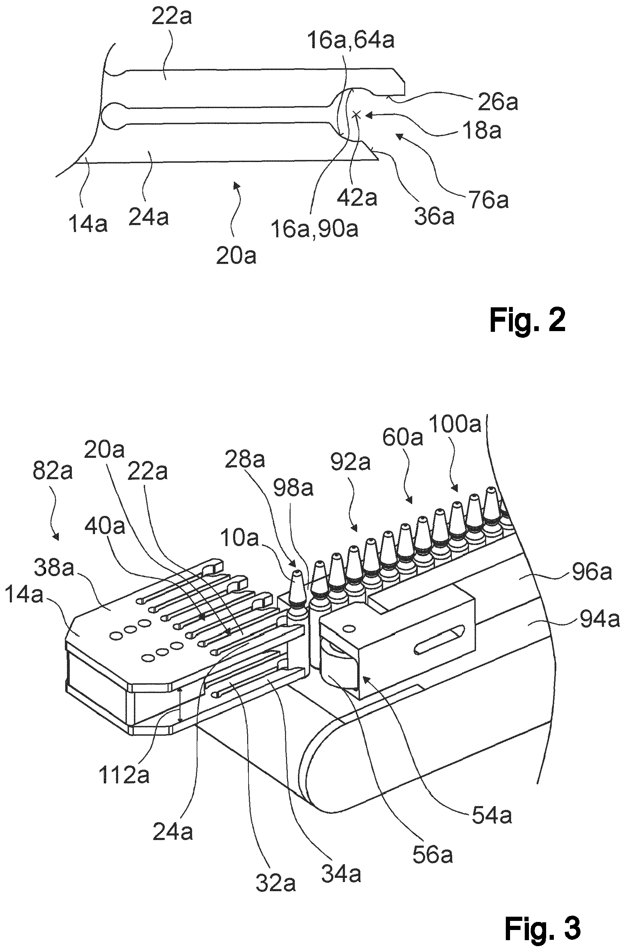

Der Objektgreifer 20a weist eine Objekthaltekontaktfläche 16a auf (vgl. auch die vergrößerte Darstellung der Greiferelemente 22a, 24a in Fig. 2). Die Objekthaltekontaktfläche 16a ist zu der Halterung des einzelnen Objekts 10a in dem Aufnahmebereich 18a der Objektaufnahmeeinheit 14a vorgesehen. Die Objekthaltekontaktfläche 16a umfasst einen ersten Teil 90a. Die Objekthaltekontaktfläche 16a umfasst einen zweiten Teil 64a. Die zwei Teile 90a, 64a der Objekthaltekontaktfläche 16a sind getrennt voneinander ausgebildet. Der erste Teil 90a der Objekthaltekontaktfläche 16a ist an dem ersten Greiferelement 22a angeordnet. Der zweite Teil 64a der Objekthaltekontaktfläche 16a ist an dem zweiten Greiferelement 24a angeordnet. Der Objektgreifer 20a ist dazu vorgesehen, das Objekt 10a durch einen von elastischen Spannungskräften der Greiferelemente 22a, 24a hervorgerufenen Kraftschluss zu haltern. Die durch ein Auseinanderdrücken der Greiferelemente 22a, 24a erzeugten elastischen Spannungskräfte werden über die Objekthaltekontaktfläche 16a an ein in dem Aufnahmebereich 18a angeordnetes Objekt 10a übertragen. Durch die elastischen Spannungskräfte werden die Teile 90a, 64a der Objekthaltekontaktfläche 16a an das in dem Aufnahmebereich 18a angeordnete Objekt 10a (von unterschiedlichen Richtungen aus) angepresst. Eine durch das erste Greiferelement 22a ausgeübte Haltekraft ist zumindest teilweise einer durch das zweite Greiferelement 24a ausgeübten Haltekraft entgegengerichtet. Die Greiferelemente 22a, 24a klemmen das zu halternde Objekt 10a in dem Aufnahmebereich 18a ein.

Das erste Greiferelement 22a weist eine Objektmitnahmekontaktfläche 26a auf. Das erste Greiferelement 22a bildet zusätzlich zu dem ersten Teil 90a der Objekthaltekontaktfläche 16a die Objektmitnahmekontaktfläche 26a aus. Die Objektmitnahmekontaktfläche 26a ist dazu vorgesehen, in zumindest einem Betriebszustand (in welchem sich z.B. die mit dem Bezugszeichen 14a versehene Objektaufnahmeeinheit in der Fig. 1 befindet) das zu fördernde Objekt 10a zu kontaktieren und mit der Objektaufnahmeeinheit 14a mitzuführen. Die Objektmitnahmekontaktfläche 26a ist dazu vorgesehen, das Objekt 10a entlang der Bewegungsrichtung 12a der Objektaufnahmeeinheit 14a mitzuführen. Die Objektmitnahmekontaktfläche 26a ist dazu vorgesehen, das Objekt 10a entlang der Bewegungsrichtung 12a der Objektaufnahmeeinheit 14a zu schieben. Die Objektmitnahmekontaktfläche 26a ist dazu vorgesehen, das Objekt 10a von einem durch die Objektzuführeinheit 60a der Förderanlagenvorrichtung 82a erzeugten Objektstau 92a zu vereinzeln. Die Objektmitnahmekontaktfläche 26a ist dazu vorgesehen, das vereinzelte Objekt 10a in Richtung einer Fixiereinrichtung 54a der Förderanlagenvorrichtung 82a zu schieben. Die Objektmitnahmekontaktfläche 26a ist verschieden von der Objekthaltekontaktfläche 16a ausgebildet. Die Objektmitnahmekontaktfläche 26a ist verschieden von dem an dem ersten Greiferelement 22a angeordneten ersten Teil 90a der Objekthaltekontaktfläche 16a ausgebildet. Die Objektmitnahmekontaktfläche 26a ist getrennt von der Objekthaltekontaktfläche 16a ausgebildet. Die Objektmitnahmekontaktfläche 26a ist getrennt von dem an dem ersten Greiferelement 22a angeordneten ersten Teil 90a der Objekthaltekontaktfläche 16a ausgebildet. Die Objektmitnahmekontaktfläche 26a grenzt an den ersten Teil 90a der Objekthaltekontaktfläche 16a an.

Die Objektmitnahmekontaktfläche 26a ist eben ausgebildet. Die Objektmitnahmekontaktfläche 26a ist senkrecht zu der Bewegungsrichtung 12a der Objektaufnahmeeinheit 14a ausgerichtet. Die Objektmitnahmekontaktfläche 26a ist parallel zu einer Vertikalrichtung ausgebildet. Die Objektmitnahmekontaktfläche 26a ist parallel zu einer senkrecht zu dem Aufnahmebereich 18a verlaufenden Axialrichtung 42a angeordnet. Die Objektmitnahmekontaktfläche 26a ist parallel zu einer Aufstellrichtung der Objekte 10a ausgerichtet. Die Objektmitnahmekontaktfläche 26a ist senkrecht zu der Zuführrichtung 62a, entlang welcher die Objekte 10a der Objektaufnahmeeinheit 14a zugeführt werden, ausgerichtet.

Das zweite Greiferelement 24a weist eine Objektführungskontaktfläche 36a auf. Die Objektführungskontaktfläche 36a ist zu einer Bewegungsführung einer Bewegung des Objekts 10a relativ zu dem ersten Greiferelement 22a vorgesehen. Die Objektführungskontaktfläche 36a ist zu einer Bewegungsführung einer Bewegung des Objekts 10a von einer ersten Position 28a, in der das Objekt 10a überwiegend die Objektmitnahmekontaktfläche 26a kontaktiert, zu einer zweiten Position 30a, in der das Objekt 10a überwiegend die Objekthaltekontaktfläche 16a kontaktiert, vorgesehen. Die Objektführungskontaktfläche 36a ist zu einer Bewegungsführung einer Bewegung des Objekts 10a von einem Betriebszustand, in dem das Objekt 10a durch die Objektmitnahmekontaktfläche 26a geschobenen wird (erste Position 28a), in einen Betriebszustand, in dem das Objekt 10a durch die Objekthaltekontaktfläche 16a in dem Aufnahmebereich 18a fixiert ist, vorgesehen. Die Objektführungskontaktfläche 36a ist verschieden von der Objekthaltekontaktfläche 16a ausgebildet. Die Objektführungskontaktfläche 36a ist verschieden von dem an dem zweiten Greiferelement 24a angeordneten zweiten Teil 64a der Objekthaltekontaktfläche 16a ausgebildet. Die Objektführungskontaktfläche 36a ist getrennt von der Objekthaltekontaktfläche 16a ausgebildet. Die Objektführungskontaktfläche 36a ist getrennt von dem an dem zweiten Greiferelement 24a angeordneten zweiten Teil 64a der Objekthaltekontaktfläche 16a ausgebildet. Die Objektführungskontaktfläche 36a ist verschieden und getrennt von der Objektmitnahmekontaktfläche 26a ausgebildet. Die Objektführungskontaktfläche 36a grenzt an den zweiten Teil 64a der Objekthaltekontaktfläche 16a an. Zwischen der Objektführungskontaktfläche 36a und der Objektmitnahmekontaktfläche 26a ist eine Öffnung 76a ausgebildet, welche einen seitlichen Zugang zu dem Aufnahmebereich 18a, d.h. einen in der Bewegungsebene der Objektaufnahmeeinheit 14a liegenden Zugang zu dem Aufnahmebereich 18a, ausbildet.

Die Objektführungskontaktfläche 36a ist eben ausgebildet. Die Objektführungskontaktfläche 36a ist schräg zu der Objektmitnahmekontaktfläche 26a ausgerichtet. Die Objektführungskontaktfläche 36a ist schräg zu der Bewegungsrichtung 12a der Objektaufnahmeeinheit 14a ausgerichtet. Die Objektführungskontaktfläche 36a ist schräg auf den Aufnahmebereich 18a zulaufend ausgerichtet. Die Objektführungskontaktfläche 36a ist parallel zu der Vertikalrichtung ausgebildet. Die Objektführungskontaktfläche 36a ist parallel zu der senkrecht zu dem Aufnahmebereich 18a verlaufenden Axialrichtung 42a angeordnet. Die Objektführungskontaktfläche 36a ist parallel zu einer Aufstellrichtung der Objekte 10a ausgerichtet.

Die Förderanlagenvorrichtung 82a weist die Fixiereinrichtung 54a auf. Die Fixiereinrichtung 54a ist in der durch die Bewegungsrichtung 12a der Objektaufnahmeeinheit 14a vorgegebenen Bewegungsbahn 68a der durch die Objektmitnahmekontaktfläche 26a geführten Objekte 10a angeordnet. Die Fixiereinrichtung 54a ist dazu vorgesehen, die Objekte 10a derart aus der durch die Objektaufnahmeeinheit 14a vorgegebenen Bewegungsbahn 68a abzulenken, dass die Objekte 10a (entlang der Objektführungskontaktfläche 36a) in den Aufnahmebereich 18a der Objektaufnahmeeinheit 14a verbracht werden. Die Fixiereinrichtung 54a bildet ein Hindernis für die vereinzelten und durch die Objektmitnahmekontaktfläche 26a geschobenen Objekte 10a aus. Der einfachste Weg, den die Objekte 10a nehmen können, um dem durch die Fixiereinrichtung 54a ausgebildeten Hindernis ausweichen zu können, ist in Richtung des Aufnahmebereichs 18a. Das erste Greiferelement 22a, welches das Objekt 10a mittels der Objektmitnahmekontaktfläche 26a vor sich her schiebt, drückt das Objekt 10a an die Fixiereinrichtung 54a an, wodurch das erste Greiferelement 22a elastisch in eine von dem zweiten Greiferelement 24a wegzeigende Richtung ausgelenkt wird. Dadurch vergrößert sich der Aufnahmebereich 18a. Dadurch vergrößert sich zudem die zwischen der Objektführungskontaktfläche 36a und der Objektmitnahmekontaktfläche 26a liegende Öffnung 76a zu dem Aufnahmebereich 18a. Sobald die Öffnung 76a größer ist als ein Durchmesser 102a des an der Fixiereinrichtung 54a angedrückten Objekts 10a, bewegt sich das Objekt 10a in den Aufnahmebereich 18a. Dadurch verschwindet der Druck auf das erste Greiferelement 22a, welches sich daraufhin elastisch in Richtung seiner Ursprungsposition rückauslenkt und den Aufnahmebereich 18a wieder soweit verkleinert, dass die Objekthaltekontaktfläche 16a das Objekt 10a im Umfang kontaktiert. Die in dem ersten Greiferelement 22a durch eine verbleibende Auslenkung verbleibende Spannung erzeugt die Haltekraft zur Halterung des Objekts 10a in dem Aufnahmebereich 18a.

Die Fixiereinrichtung 54a ist als eine Rolle 56a ausgebildet. Die Rolle 56a ist frei drehbar um eine parallel zu der Aufstellrichtung der Objekte 10a und/oder parallel zu der senkrecht zu dem Aufnahmebereich 18a verlaufenden Axialrichtung 42a angeordneten Rollenachse 104a gelagert. Die Fixiereinrichtung 54a ist an der Objektzuführeinheit 60a befestigt. Die Rolle 56a ist in die Objektzuführeinheit 60a, insbesondere in eine Begrenzung 96a der Objektzuführeinheit 60a, integriert. Die Rolle 56a ist entlang der Bewegungsrichtung 12a gesehen hinter der Reihe von Objekten 100a, die der Objektaufnahmeeinheit 14a zugeführt werden, angeordnet.

Die Förderanlagenvorrichtung 82a weist eine Löseeinrichtung 66a auf. Die Löseeinrichtung 66a ist in der durch die Bewegungsrichtung 12a der Objektaufnahmeeinheit 14a vorgegebenen Bewegungsbahn 68a der durch die Objektgreifer 20a, 40a gehalterten Objekte 10a angeordnet. Die Löseeinrichtung 66a ist dazu vorgesehen, die Objekte 10a derart aus der durch die Objektaufnahmeeinheit 14a vorgegebenen Bewegungsbahn 68a abzulenken, dass die Objekte 10a aus dem Aufnahmebereich 18a der Objektaufnahmeeinheit 14a entfernt werden. Die Löseeinrichtung 66a bildet ein weiteres Hindernis für die durch die Objektgreifer 20a, 40a gehalterten und entlang der Bewegungsbahn 68a geförderten Objekte 10a aus. Der einfachste Weg, den die Objekte 10a nehmen können, um dem durch die Löseeinrichtung 66a ausgebildeten weiteren Hindernis ausweichen zu können, ist durch die zwischen der Objektführungskontaktfläche 36a und der Objektmitnahmekontaktfläche 26a liegende Öffnung 76a aus dem Aufnahmebereich 18a heraus. Das erste Greiferelement 22a drückt das Objekt 10a an die Löseeinrichtung 66a an, wodurch das erste Greiferelement 22a elastisch in eine von dem zweiten Greiferelement 24a wegzeigende Richtung ausgelenkt wird. Dadurch vergrößert sich der Aufnahmebereich 18a. Dadurch vergrößert sich zudem die Öffnung 76a zu dem Aufnahmebereich 18a. Sobald die Öffnung 76a größer ist als der Durchmesser 102a des an der Löseeinrichtung 66a angedrückten Objekts 10a, bewegt sich das Objekt 10a aus dem Aufnahmebereich 18a heraus. Die Förderanlagenvorrichtung 82a weist eine Objektabführeinheit 72a auf. Die Objektabführeinheit 72a ist dazu vorgesehen, die durch die Löseeinrichtung 66a aus den Objektgreifern 20a entfernten Objekte 10a geordnet abzuführen. Die Objektabführeinheit 72a weist eine Auslaufschiene 106a auf. Die Objektabführeinheit 72a führt die aus den Objektgreifern 20a, 40a entnommenen Objekte 10a entlang der Auslaufschiene 106a in eine Auslaufrichtung 110a ab. Die Auslaufschiene 106a ist in der Bewegungsebene der Objektaufnahmeeinheit 14a schräg zu der Bewegungsrichtung 12a ausgerichtet. Die Auslaufschiene 106a, insbesondere die Auslaufrichtung 110a, und die Bewegungsrichtung 12a schließen einen Winkel von etwa 160° ein. Die Auslaufrichtung 110a und die Zuführrichtung 62a schließen einen Winkel von etwa 70° ein. Die Öffnung 76a zeigt in Richtung der durch die Objektabführeinheit 72a ausgebildeten Auslaufschiene 106a. Die aus dem Aufnahmebereich 18a entfernten Objekte 10a werden von der Löseeinrichtung 66a und den Greiferelementen 22a, 24a, insbesondere von der Objektmitnahmekontaktfläche 26a des ersten Greiferelements 22a, in die Auslaufschiene 106a geführt/gedrückt.

Die Löseeinrichtung 66a ist als eine Rolle 70a ausgebildet. Die Rolle 70a ist frei drehbar um eine parallel zu der Aufstellrichtung der Objekte 10a und/oder parallel zu der senkrecht zu dem Aufnahmebereich 18a verlaufenden Axialrichtung 42a angeordnete Rollenachse 108a gelagert. Die Löseeinrichtung 66a ist an der Objektabführeinheit 72a befestigt. Die Rolle 70a ist in die Objektabführeinheit 72a, insbesondere in die Auslaufschiene 106a der Objektabführeinheit 72a integriert.

Die Fig. 3 zeigt eine schematische perspektivische Ansicht der Förderanlagenvorrichtung 82a, insbesondere der Objektzuführeinheit 60a, der Fixiereinrichtung 54a und einer Objektaufnahmeeinheit 14a der Förderanlagenvorrichtung 82a. Das vorderste Objekt 10a der in der Objektzuführeinheit 60a aufgereihten Reihe von Objekten 100a befindet sich in der Fig. 3 beispielhaft in der ersten Position 28a. In der perspektivischen Ansicht von Fig. 3 wird deutlich, dass jeder Objektgreifer 20a, 40a weitere Greiferelemente 32a, 34a aufweist. Der Objektgreifer 20a weist ein weiteres erstes Greiferelement 32a auf. Das weitere erste Greiferelement 32a ist identisch zu dem ersten Greiferelement 22a ausgebildet. Das weitere erste Greiferelemente 32a des Objektgreifers 20a überlappt mit dem ersten Greiferelement 22a des Objektgreifers 20a. Daher ist das weitere erste Greiferelement 32a in der Draufsicht aus Fig. 1 nicht sichtbar. Das weitere erste Greiferelement 32a des Objektgreifers 20a ist in der senkrecht zu dem Aufnahmebereich 18a verlaufenden Axialrichtung 42a von dem ersten Greiferelement 22a des Objektgreifers 20a beabstandet angeordnet. Das erste Greiferelement 22a und das zweite Greiferelement 24a sind dazu vorgesehen, das Objekt 10a in einer oberen Hälfte des Objekts 10a zu greifen. Der Objektgreifer 20a weist ein weiteres zweites Greiferelement 34a auf. Das weitere zweite Greiferelement 34a ist identisch zu dem zweiten Greiferelement 24a ausgebildet. Das weitere zweite Greiferelemente 34a des Objektgreifers 20a überlappt mit dem zweiten Greiferelement 24a des Objektgreifers 20a. Daher ist das zweite weitere Greiferelement 34a in der Draufsicht aus Fig. 1 nicht sichtbar. Das weitere zweite Greiferelement 32a des Objektgreifers 20a ist in der senkrecht zu dem Aufnahmebereich 18a verlaufenden Axialrichtung 42a von dem zweiten Greiferelement 22a des Objektgreifers 20a beabstandet angeordnet. Das erste weitere Greiferelement 32a und das zweite weitere Greiferelement 34a sind dazu vorgesehen, das Objekt 10a in einer unteren Hälfte des Objekts 10a zu greifen. Zwischen den Angriffspunkten der Greiferelemente 22a, 24a und den Angriffspunkten der weiteren Greiferelemente 32a, 34a weist die Objektaufnahmeeinheit 14a eine Abstandslücke 112a auf.

Die Fixiereinrichtung 54a, insbesondere die Rolle 56a, ist in dem in Fig. 3 dargestellten Beispiel oberhalb der weiteren Greiferelemente 32a, 34a angeordnet. Die Rolle 56a ist in einer Horizontalebene angeordnet, die in Vertikalrichtung oberhalb einer Horizontalebene verläuft, auf der die weiteren Greiferelemente 32a, 34a angeordnet sind. Die Fixiereinrichtung 54a, insbesondere die Rolle 56a, ist in dem in Fig. 3 dargestellten Beispiel unterhalb der Greiferelemente 22a, 24a angeordnet. Die Rolle 56a ist in einer Horizontalebene angeordnet, die in Vertikalrichtung unterhalb einer Horizontalebene verläuft, auf der die Greiferelemente 22a, 24a angeordnet sind. Die Fixiereinrichtung 54a, insbesondere die Rolle 56a, ist in dem in Fig. 3 dargestellten Beispiel zwischen den Greiferelementen 22a, 24a und den weiteren Greiferelementen 32a, 34a des Objektgreifers 20a angeordnet. Die Rolle 56a ist in einer Horizontalebene angeordnet, die in Vertikalrichtung zwischen den Horizontalebenen verläuft, auf denen die Greiferelemente 22a, 24a, 32a, 34a angeordnet sind. Die Fixiereinrichtung 54a, insbesondere die Rolle 56a, ist in dem in Fig. 3 dargestellten Beispiel derart angeordnet, dass sie zwischen den Greiferelementen 22a, 24a und den weiteren Greiferelementen 32a, 34a eines entlang der Bewegungsrichtung 12a vorbeibewegten Objektgreifers 20a angeordnet ist. Alternativ sind jedoch auch Anordnungen denkbar, in denen die Fixiereinrichtung 54a oberhalb aller Greiferelemente 22a, 24a, 32a, 34a der Objektgreifer 20a, 40a oder unterhalb aller Greiferelemente 22a, 24a, 32a, 34a der Objektgreifer 20a, 40a angeordnet ist.

Die Löseeinrichtung 66a, insbesondere die Rolle 70a, ist von der Bewegungsebene der Objektaufnahmeeinheit 14a aus gesehen ebenfalls oberhalb der weiteren Greiferelemente 32a, 34a und unterhalb der Greiferelemente 22a, 24a, d.h. insbesondere zwischen den Greiferelementen 22a, 24a und den weiteren Greiferelementen 32a, 34a angeordnet. Die Rolle 70a der Löseeinrichtung 66a ist zumindest im Wesentlichen identisch zu der Rolle 56a der Fixiereinrichtung 54a. Die Rolle 70a der Löseeinrichtung 66a ist (insbesondere relativ zu den Objektgreifern 20a, 40a gesehen) auf selber Höhe wie die Rolle 56a der Fixiereinrichtung 54a angeordnet.

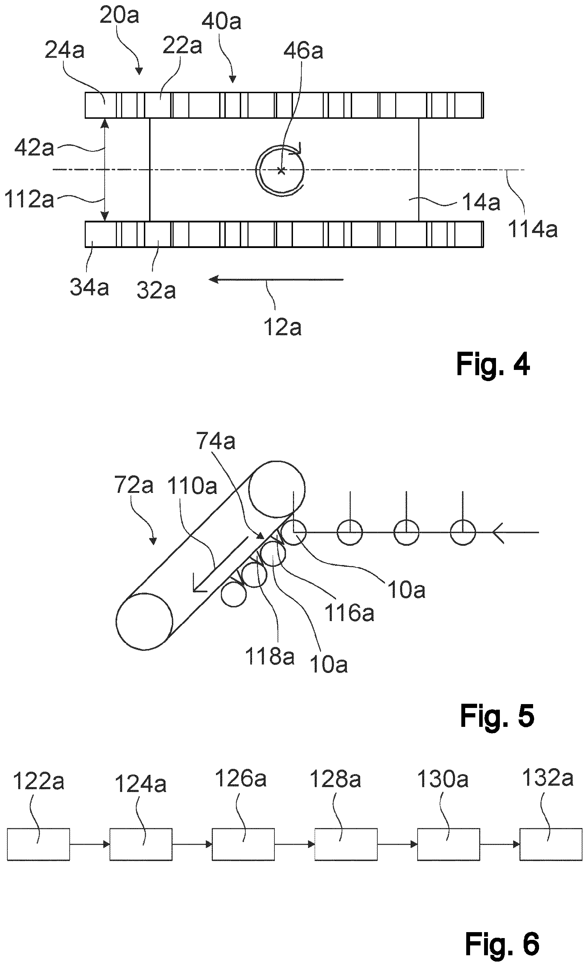

Die Fig. 4 zeigt eine schematische Vorderansicht der Objektaufnahmeeinheit 14a. Die Objektaufnahmeeinheit 14a ist um eine Rotationsachse 46a drehbar gelagert. Die Rotationsachse 46a der Objektaufnahmeeinheit 14a verläuft senkrecht zu der Bewegungsrichtung 12a der Objektaufnahmeeinheit 14a. Die Rotationsachse 46a der Objektaufnahmeeinheit 14a verläuft parallel zu einer Haupterstreckungsebene 114a des Objektgreifers 20a, insbesondere der Objektaufnahmeeinheit 14a.

Die Fig. 5 zeigt eine schematische Detailansicht der Objektabführeinheit 72a. Die Objektabführeinheit 72a weist eine Vereinzelungseinheit 74a auf. Die Vereinzelungseinheit 74a ist als ein Zahnriemen ausgebildet. Zwischen zwei aufeinanderfolgenden Zähnen 116a, 118a des Zahnriemens passt jeweils genau ein Objekt 10a. Der Zahnriemen schiebt die durch die Zähne 116a, 118a vereinzelten Objekte 10a in Auslaufrichtung 110a entlang der Auslaufschiene 106a.

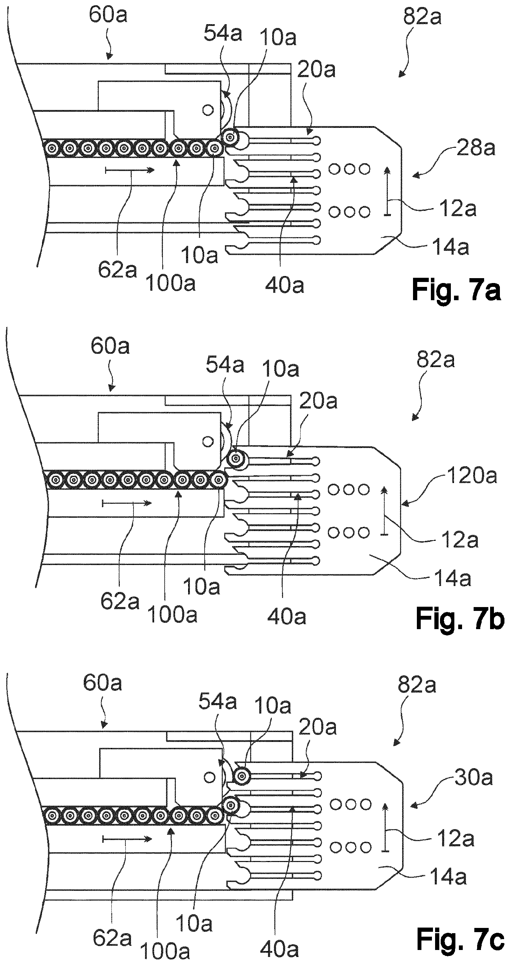

Die Fig. 6 zeigt in schematisches Ablaufdiagramm eines Verfahrens zum Betrieb der Förderanlage 78a. In zumindest einem Verfahrensschritt 122a werden von der Objektzuführeinheit 60a Objekte 10a entlang der Zuführrichtung 62a bewegt. Die zugeführten Objekte 10a stoßen dabei auf einen Objektgreifer 20a, 40a der Objektaufnahmeeinheit 14a (erste Position 28a, siehe Fig. 7a). In zumindest einem weiteren Verfahrensschritt 124a wird das vorderste Objekt 10a der zugeführten Reihe von Objekten 100a von der Objektmitnahmekontaktfläche 26a in Richtung der Bewegungsrichtung 12a auf die Fixiereinrichtung 54a zu geschoben. Dadurch wird das Objekt 10a vereinzelt. Dabei trifft das Objekt 10a auf die Rolle 56a der Fixiereinrichtung 54a. In zumindest einem weiteren Verfahrensschritt 126a wird das erste Greiferelement 22a durch den von der Rolle 56a ausgeübten Druck elastisch ausgelenkt und das Objekt 10a bewegt sich entlang der Objektführungskontaktfläche 36a in den Aufnahmebereich 18a hinein (Zwischenposition 120a, siehe Fig. 7b). Währenddessen rückt das nächste Objekt 10a der Reihe von Objekten 100a in die erste Position 28a nach. In zumindest einem weiteren Verfahrensschritt 128a wird das Objekt 10a durch die von den Greiferelementen 22a, 24a erzeugte Haltekraft in dem Aufnahmebereich 18a fixiert (zweite Position 30a, siehe Fig. 7c). Das derart fixierte Objekt 10a wird nun an der Fixiereinrichtung 54a vorbeibewegt. In zumindest einem weiteren Verfahrensschritt 130a wird das gehalterte Objekt 10a aufrecht entlang der Bewegungsbahn 68a der Förderanlage 78a gefördert. In zumindest einem weiteren Verfahrensschritt 132a wird das Objekt 10a von der Löseeinrichtung 66a aus dem Aufnahmebereich 18a entfernt und von der Objektabführeinheit 72a abgeführt.

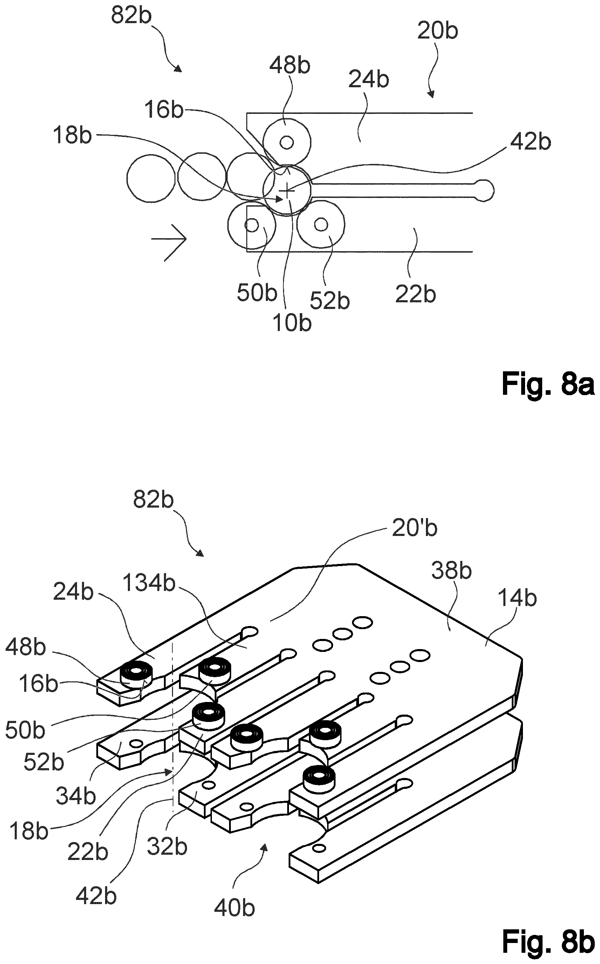

In den Figuren 8a bis 11 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7c, verwiesen werden kann. Zur Unterscheidung der Ausführungsbeispiele ist der Buchstabe a den Bezugszeichen des Ausführungsbeispiels in den Figuren 1 bis 7c nachgestellt. In den Ausführungsbeispielen der Figuren 8a bis 11 ist der Buchstabe a durch die Buchstaben b bis e ersetzt

Die Figuren 8a und 8b zeigen alternative Objektgreifer 20b, 20'b einer Objektaufnahmeeinheit 14b einer alternativen Förderanlagenvorrichtung 82b. Die Objektgreifer 20b, 20'b bilden jeweils einen Aufnahmebereich 18b aus. Die Objektgreifer 20b, 20'b umfassen Greiferelemente 22b, 24b, 134b, die eine Objekthaltekontaktfläche 16b ausbilden. Die Objekthaltekontaktfläche 16b ist dabei zumindest teilweise durch je drei Wälzlager 48b, 50b, 52b ausgebildet. Die Wälzlager 48b, 50b, 52b könnten alternativ auch als Rollen ausgebildet sein. Die Wälzlager 48b, 50b, 52b erlauben eine Rotation eines in dem Aufnahmebereich 18b gehalterten Objekts 10b um eine senkrecht zu dem Aufnahmebereich 18b verlaufende Axialrichtung 42b. In dem Ausführungsbeispiel der Fig. 8a weist der Objektgreifer 20b zwei Greiferelemente 22b, 24b auf. In diesem Ausführungsbeispiel sind zwei Wälzlager 50b, 52b an dem ersten Greiferelement 22b und ein Wälzlager 48b an dem zweiten Greiferelement 24b angeordnet und/oder befestigt. In dem Ausführungsbeispiel der Fig. 8b weist der Objektgreifer 20b drei Greiferelemente 22b, 24b, 134b auf. In der Fig. 8b ist die Objektaufnahmeeinheit 14b in einer Ansicht von unten gezeigt. In diesem Ausführungsbeispiel ist je ein Wälzlager 48b, 50b, 52b an jedem Greiferelement 22b, 24b, 134b angeordnet. und/oder befestigt. Es ist denkbar, dass zusätzliche Wälzlager oder Rollen an weiteren, in Vertikalrichtung von den Greiferelementen 22b, 24b, 134b beabstandeten Greiferelementen 32b, 34b, 134'b angeordnet sind (nicht gezeigt). Die Wälzlager 48b, 50b, 52b sind vorzugsweise als Rillenkugellager ausgebildet. Die Wälzlager 48b, 50b, 52b können auf einer Oberseite der Greiferelemente 22b, 24b, 134b oder auf einer Unterseite der Greiferelemente 22b, 24b, 134b angeordnet sein oder zumindest teilweise in die Greiferelemente 22b, 24b, 134b integriert sein.

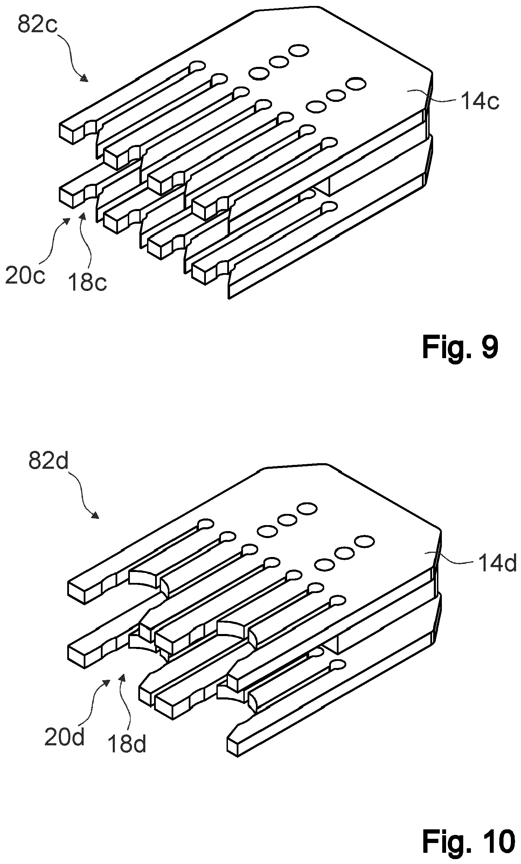

Die Fig. 9 zeigt einen zweiten alternativen Objektgreifer 20c einer Objektaufnahmeeinheit 14c einer zweiten alternativen Förderanlagenvorrichtung 82c. Der Objektgreifer 20c bildet einen Aufnahmebereich 18c aus. Der Aufnahmebereich 18c ist vergleichsweise kleiner als der in den Figuren 1 bis 7c gezeigte Aufnahmebereich 18a. Der zweite alternative Objektgreifer 20c ist zu einem Greifen von Pipetten vorgesehen. Der Aufnahmebereich 18c des zweiten alternativen Objektgreifers 20c ist an einen typischen Außendurchmesser einer Pipette angepasst. Weitere abweichende Größen von Aufnahmebereichen für Objekte verschiedener Größen sind denkbar. Beispielsweise ist der alternative Objektgreifer 20b aus Fig. 8b oder der dritte alternative Objektgreifer 20d aus Fig. 10 zu einem Greifen eines Vials vorgesehen, so dass deren jeweilige Aufnahmebereiche 18b, 18d für einen typischen Vialdurchmesser angepasst sind.

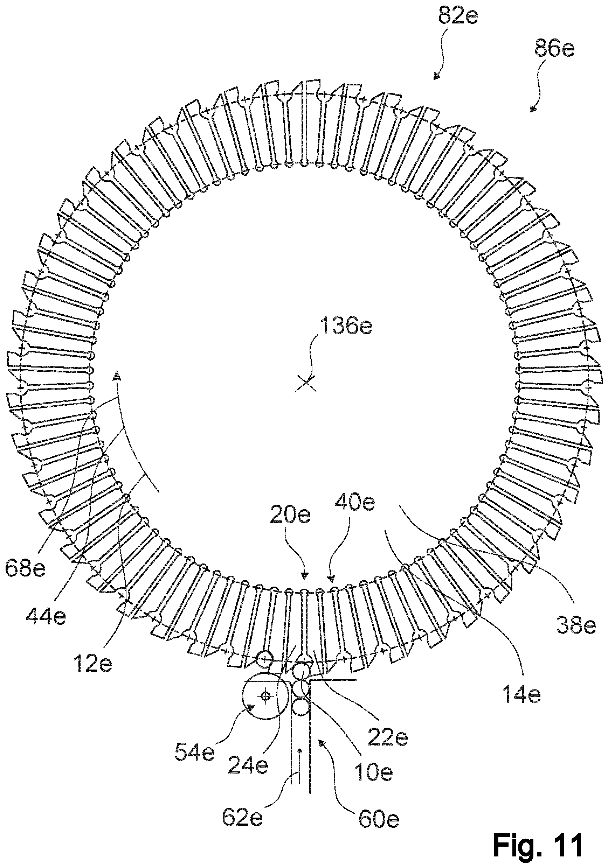

Die Fig. 11 zeigt einen Teil einer vierten alternativen Förderanlagenvorrichtung 82e. Die Förderanlagenvorrichtung 82e weist eine Objektaufnahmeeinheit 14e auf. Die Objektaufnahmeeinheit 14e umfasst mehrere Objektgreifer 20e, 40e. Die Objektgreifer 20e, 40e der Objektaufnahmeeinheit 14e sind entlang einer eine gekrümmte Bahn 44e ausbildenden Kurve nebeneinander angeordnet. Die Objektaufnahmeeinheit 14e ist als ein Förderstern 86e ausgebildet. Der Förderstern 86e ist einstückig ausgebildet. Alternativ ist jedoch auch eine mehrteilige Ausbildung des Fördersterns 86e denkbar. Der Förderstern 86e ist um eine zentral durch den Förderstern 86e verlaufende Rotationsachse 136e rotierbar ausgebildet. Durch die Rotation des Fördersterns 86e werden die entlang der gekrümmten Bahn 44e nebeneinander angeordneten Objektgreifer 20e, 40e an einer Objektzuführeinheit 60e vorbeigeführt, welche insbesondere dazu vorgesehen ist, Objekte 10e dem Förderstern 86e zuzuführen. Die Objektzuführeinheit 60e der Fig. 11 ist zumindest im Wesentlichen identisch zu der Objektzuführeinheit 60a aus Fig. 1 ausgebildet.

### Bezugszeichen

- 10: Objekt
- 12: Bewegungsrichtung
- 14: Objektaufnahmeeinheit
- 16: Objekthaltekontaktfläche
- 18: Aufnahmebereich
- 20: Objektgreifer
- 22: Erstes Greiferelement
- 24: Zweites Greiferelement
- 26: Objektmitnahmekontaktfläche
- 28: Erste Position
- 30: Zweite Position
- 32: Weiteres erstes Greiferelement
- 34: Weiteres zweites Greiferelement
- 36: Objektführungskontaktfläche
- 38: Objektgreiferbasis
- 40: Objektgreifer
- 42: Axialrichtung
- 44: gekrümmte Bahn
- 46: Rotationsachse
- 48: Wälzlager
- 50: Wälzlager
- 52: Wälzlager
- 54: Fixiereinrichtung
- 56: Rolle
- 58: Führungssystem
- 60: Objektzuführeinheit
- 62: Zuführrichtung
- 64: Zweiter Teil
- 66: Löseeinrichtung
- 68: Bewegungsbahn
- 70: Rolle
- 72: Objektabführeinheit
- 74: Vereinzelungseinheit
- 76: Öffnung
- 78: Förderanlage
- 80: Förderschiene
- 82: Förderanlagenvorrichtung
- 84: Objektaufnahmeeinheit
- 86: Förderstern
- 88: Objektaufnahmeeinheit
- 90: Erster Teil
- 92: Objektstau
- 94: Förderband
- 96: Begrenzung
- 98: Begrenzung
- 100: Reihe von Objekten
- 102: Durchmesser
- 104: Rollenachse
- 106: Auslaufschiene
- 108: Rollenachse
- 110: Auslaufrichtung
- 112: Abstandslücke
- 114: Haupterstreckungsebene
- 116: Zahn
- 118: Zahn
- 120: Zwischenposition
- 122: Verfahrensschritt
- 124: Verfahrensschritt
- 126: Verfahrensschritt
- 128: Verfahrensschritt
- 130: Verfahrensschritt
- 132: Verfahrensschritt
- 134: Greiferelement
- 136: Rotationsachse

## Patentansprüche

1. Förderanlagenvorrichtung (82a-e) zu einem geordneten Fördern von länglich und/oder zylindrisch erstreckten Objekten (10a-e) wie Ampullen, Karpulen, Spritzen, Pipetten, Vials oder dergleichen,
mit zumindest einer, entlang einer Bewegungsrichtung (12a-e) beweglich gelagerten und zu einer Stück-für-Stück-Aufnahme der einzelnen Objekte (10a-e) vorgesehenen Objektaufnahmeeinheit (14a-e),
welche zumindest einen, zumindest eine Objekthaltekontaktfläche (16a-e) ausbildenden und zur Halterung eines einzelnen Objekts (10a-e) in einem Aufnahmebereich (18a-e) der Objektaufnahmeeinheit (14a-e) vorgesehenen, Objektgreifer (20a-e) mit zumindest einem ersten Greiferelement (22a-e) und mit zumindest einem zweiten Greiferelement (24a-e) umfasst,
**dadurch gekennzeichnet, dass**
das erste Greiferelement (22a-e) eine Objektmitnahmekontaktfläche (26a-e) ausbildet, welche dazu vorgesehen ist, in zumindest einem Betriebszustand das zu fördernde Objekt (10a-e) zu kontaktieren und mit der Objektaufnahmeeinheit (14a-e) mitzuführen.

2. Förderanlagenvorrichtung (82a-e) nach Anspruch 1, **dadurch gekennzeichnet, dass** zumindest ein Großteil der Objektmitnahmekontaktfläche (26a-e) zumindest im Wesentlichen senkrecht zu der Bewegungsrichtung (12a-e) der Objektaufnahmeeinheit (14a-e) ausgerichtet ist.

3. Förderanlagenvorrichtung (82a-e) nach Anspruch 1 oder 2, **dadurch gekennzeichnet, dass** die Objektmitnahmekontaktfläche (26a-e) zumindest abschnittweise verschieden und/oder getrennt von der Objekthaltekontaktfläche (16a-e) ausgebildet ist.

4. Förderanlagenvorrichtung (82a-e) nach einem der vorhergehenden Ansprüche, **dadurch gekennzeichnet, dass** das zweite Greiferelement (24a-e) eine Objektführungskontaktfläche (36a-e) aufweist, welche zu einer Bewegungsführung einer zu dem ersten Greiferelement (22a-e) relativen Bewegung des Objekts (10a-e) von einer ersten Position (28a-e), in der das Objekt (10a-e) überwiegend die Objektmitnahmekontaktfläche (26a-e) kontaktiert, zu einer zweiten Position (30a-e), in der das Objekt (10a-e) überwiegend die Objekthaltekontaktfläche (16a-e) kontaktiert, vorgesehen ist.

5. Förderanlagenvorrichtung (82a-e) nach Anspruch 4, **dadurch gekennzeichnet, dass** die Objektführungskontaktfläche (36a-e) schräg zu der Objektmitnahmekontaktfläche (26a-e) und/oder schräg zu der Bewegungsrichtung (12a-e) der Objektaufnahmeeinheit (14a-e) ausgerichtet ist.

6. Förderanlagenvorrichtung (82a-e) nach einem der vorhergehenden Ansprüche, **dadurch gekennzeichnet, dass** das erste Greiferelement (22a-e) des Objektgreifers (20a-e) und das zweite Greiferelement (24a-e) des Objektgreifers (20a-e) jeweils einstückig mit einer Objektgreiferbasis (38a-e) ausgebildet sind.

7. Förderanlagenvorrichtung (82a-e) nach einem der vorhergehenden Ansprüche, **dadurch gekennzeichnet, dass** der Objektgreifer (20a-e) zumindest ein zu dem ersten Greiferelement (22a-e) zumindest im Wesentlichen identisches weiteres erstes Greiferelement (32a-e) aufweist und/oder dass der Objektgreifer (20a-e) zumindest ein zu dem zweiten Greiferelement (24a-e) zumindest im Wesentlichen identisches weiteres zweites Greiferelement (34a-e) aufweist, wobei insbesondere die weiteren Greiferelemente (32a-e, 34a-e) des Objektgreifers (20a-e) jeweils mit den Greiferelementen (22a-e, 24a-e) des Objektgreifers (20a-e) zumindest zu einem Großteil überlappend angeordnet sind und/oder dass die weiteren Greiferelemente (32a-e, 34a-e) des Objektgreifers (20a-e) in einer senkrecht zu dem Aufnahmebereich (18a-e) verlaufenden Axialrichtung (42a-e) von den Greiferelementen (22a-e, 24a-e) des Objektgreifers (20a-e) beabstandet angeordnet sind.

8. Förderanlagenvorrichtung (82a-e) nach einem der vorhergehenden Ansprüche, **dadurch gekennzeichnet, dass** die Objektaufnahmeeinheit (14a-e) zumindest zwei Objektgreifer (20a-e, 40a-e) aufweist, wobei die zumindest zwei Objektgreifer (20a-d, 40a-d) der Objektaufnahmeeinheit (14a-d) entlang einer geraden Linie in Reihe nebeneinander angeordnet sind oder wobei die zumindest zwei Objektgreifer (20e, 40e) der Objektaufnahmeeinheit (14e) entlang einer eine gekrümmte Bahn (44e) ausbildenden Kurve nebeneinander angeordnet sind.

9. Förderanlagenvorrichtung (82a-e) nach einem der vorhergehenden Ansprüche, **dadurch gekennzeichnet, dass** die Objektaufnahmeeinheit (14a-e) um eine zumindest im Wesentlichen senkrecht zu der Bewegungsrichtung (12a-e) der Objektaufnahmeeinheit (14a-e) und zumindest im Wesentlichen parallel zu einer Haupterstreckungsebene (114a-e) des Objektgreifers (20a-e) verlaufende Rotationsachse (46a-e) der Objektaufnahmeeinheit (14a-e) drehbar gelagert ist.

10. Förderanlagenvorrichtung (82b) nach dem Oberbegriff des Anspruchs 1, insbesondere nach einem der vorhergehenden Ansprüche, **dadurch gekennzeichnet, dass** die Objekthaltekontaktfläche (16b) zumindest teilweise durch eine Mehrzahl, vorzugsweise durch zumindest drei, Wälzlager (48b, 50b, 52b) oder Rollen ausgebildet ist.

11. Förderanlagenvorrichtung (82a-e) nach einem der vorhergehenden Ansprüche, **gekennzeichnet durch** eine Fixiereinrichtung (54a-e), welche in einer durch die Bewegungsrichtung (12a-e) der Objektaufnahmeeinheit (14a-e) vorgegebenen Bewegungsbahn (68a-e) der durch die Objektmitnahmekontaktfläche (26a-e) geführten Objekte (10a-e) angeordnet ist, und welche dazu vorgesehen ist, die Objekte (10a-e) derart aus der durch die Objektaufnahmeeinheit (14a-e) vorgegebenen Bewegungsbahn (68a-e) abzulenken, dass die Objekte (10a-e) in den Aufnahmebereich (18a-e) der Objektaufnahmeeinheit (14a-e) verbracht werden, wobei insbesondere die Fixiereinrichtung (54a-e) zumindest eine Rolle (56a-e) aufweist, welche oberhalb der Greiferelemente (32a-e, 34a-e), unterhalb der Greiferelemente (22a-e, 24a-e) und/oder zwischen den Greiferelementen (22a-e, 24a-e) und weiteren Greiferelementen (32a-e, 34a-e) des Objektgreifers (20a-e) angeordnet ist.

12. Förderanlagenvorrichtung (82a-e) nach einem der vorhergehenden Ansprüche, **gekennzeichnet durch** eine Objektzuführeinheit (60a-e), welche dazu vorgesehen ist, die Objekte (10a-e) entlang einer zumindest im Wesentlichen in einer Bewegungsebene der Objektaufnahmeeinheit (14a-e) verlaufenden und zumindest im Wesentlichen senkrecht oder schräg zu der Bewegungsrichtung (12a-e) der Objektaufnahmeeinheit (14a-e) stehenden Zuführrichtung (62a-e) der Objektaufnahmeeinheit (14a-e) zuzuführen.

13. Förderanlagenvorrichtung (82a-e) nach einem der vorhergehenden Ansprüche, **gekennzeichnet durch** eine Löseeinrichtung (66a-e), welche in einer durch die Bewegungsrichtung (12a-e) der Objektaufnahmeeinheit (14a-e) vorgegebenen Bewegungsbahn (68a-e) der durch die Objektgreifer (20a-e, 40a-e) gehalterten Objekte (10a-e) angeordnet ist, und welche dazu vorgesehen ist, die Objekte (10a-e) derart aus der durch die Objektaufnahmeeinheit (14a-e) vorgegebenen Bewegungsbahn (68a-e) abzulenken, dass die Objekte (10a-e) aus dem Aufnahmebereich (18a-e) der Objektaufnahmeeinheit (14a-e) entfernt werden, wobei insbesondere die Löseeinrichtung (66a-e) zumindest eine Rolle (70a-e) aufweist, welche, insbesondere von einer Bewegungsebene der Objektaufnahmeeinheit (14a-e) aus gesehen, oberhalb der Greiferelemente (32a-e, 34a-e), unterhalb der Greiferelemente (22a-e, 24a-e) und/oder zwischen den Greiferelementen (22a-e, 24a-e) und weiteren Greiferelementen (32a-e, 34a-e) des Objektgreifers (20a-e) angeordnet ist.

14. Förderanlage (78a-e) zu einem geordneten Fördern von länglich und/oder zylindrisch erstreckten Objekten (10a-e) wie Ampullen, Karpulen, Spritzen, Pipetten, Vials oder dergleichen, mit einer Förderanlagenvorrichtung (82a-e) nach einem der vorhergehenden Ansprüche, insbesondere aufweisend eine Mehrzahl von getrennt voneinander ausgebildeten, hintereinander aufgereihten und entlang einer Förderschiene (80a-d) bewegbaren Objektaufnahmeeinheiten (14a-d, 84a-d, 88a-d).

15. Verfahren zum Betrieb einer Förderanlagenvorrichtung (82a-e) nach einem der Ansprüche 1 bis 13 und/oder zum Betrieb einer Förderanlage (78a-e) nach dem Anspruch 14.
